# EUROPÄISCHE PATENTSCHRIFT

(11) **EP 1 966 285 B1**
(45) Veröffentlichungstag und Bekanntmachung des Hinweises auf die Patenterteilung: **22.06.2011**
(21) Anmeldenummer: 06829649.0
(22) Anmeldetag: 15.12.2006
(51) Int. Cl.: C08J 3/24, C08J 5/12, B32B 25/08

(54) **NEUE KAUTSCHUK-THERMOPLAST-MEHRKOMPONENTEN-SYSTEME, DARAUS HERGESTELLTE KAUTSCHUK-THERMOPLAST-VERBUND-FORMTEILE, VERFAHREN ZU IHRER HERSTELLUNG UND IHRE VERWENDUNG**
NOVEL RUBBER AND THERMOPLASTIC MULTI-COMPONENT SYSTEMS RUBBER AND THERMOPLASTIC COMPOSITE MOULDED PIECES MADE THEREFROM METHOD FOR PRODUCTION AND USE THEREOF
NOUVEAUX SYSTEMES A PLUSIEURS COMPOSANTS DE CAOUTCHOUC-THERMOPLASTIQUE, PIECES MOULEES COMPOSITES EN CAOUTCHOUC-THERMOPLASTIQUE PRODUITES A PARTIR DE CES SYSTEMES, PROCEDE POUR LES PRODUIRE ET UTILISATION DESDITS SYSTEMES

(30) Priorität: 22.12.2005 DE 102005062075
(43) Veröffentlichungstag der Anmeldung: 10.09.2008
(73) Patentinhaber: LANXESS Deutschland GmbH, 51369 Leverkusen (DE)
(72) Erfinder: ACHTEN, Dirk, 50735 Köln (DE); NICKEL, Stefanie, 47877 Willich (DE); SCHULTE, Maik, 58119 Hagen (DE); MÜNKER, Michael, 214028 Wuxi, Jiangsu (CN); JOACHIMI, Detlev, 47800 Krefeld (DE)
(86) Internationale Anmeldenummer: PCT/EP2006/012099
(87) Internationale Veröffentlichungsnummer: WO 2007/079903

(56) Entgegenhaltungen:
- EP-A- 1 285 745
- EP-A1- 1 226 932
- GB-A- 1 305 893
- US-A1- 5 141 816

## Beschreibung

Die Erfindung betrifft ein Mehrkomponenten-System aus einer Thermoplast-Komponente und einer Kautschuk-Komponente, welche mindestens zwei verschiedene peroxidische Vernetzer mit speziellen Zerfallstemperaturen enthält, sowie das Verfahren zur Herstellung von Kautschuk-Thermoplast-Verbund-Formteilen unter Einsatz des Mehrkomponenten-Systems sowie die dabei erhaltenen Kautschuk-Thermoplast-Verbund-Formteile.

Aufgrund der unterschiedlichen Temperaturbereiche für die Verarbeitung von Thermoplast- bzw. Kautschuk-Komponenten sind Verfahren zur Herstellung von Kautschuk-Kunststoff-Verbundgegenständen häufig mit Schwierigkeiten im Hinblick auf die Temperierung und Formstabilität des Thermoplasten verbunden, und es bestehen Probleme, derartige Formteile in einem Werkzeug und in einem vollautomatischen Prozess zu fertigen.

Verbundwerkstoffe aus thermoplastisch steifen und gummielastischen Teilstücken wurden lange Zeit vor allem durch Kleben, Verschrauben, Nieten, mechanisches Verkrallen oder unter Verwendung eines Haftvermittlers zusammengefügt.

Dabei handelt es sich üblicherweise um dreistufige Verfahren, bei denen die beiden Formteile in zwei separaten Schritten jeweils einzeln hergestellt und im dritten Schritt in Handarbeit kombiniert werden. Sofern notwendig werden sie in einer weiteren Stufe zur Haftung gebracht. Diese Verfahren sind entsprechend kostenintensiv, und es ist häufig ein erhöhter Anteil an Ausschussware zu verzeichnen. Darüber hinaus muss ein enormer Kostenaufwand zur Kontrolle der Dichtungslage betrieben werden.

In zweistufigen Verfahren wird in der ersten Stufe zunächst der Thermoplast gespritzt, bei Bedarf mit Haftmitteln versehen und dann die Elastomer-Komponente in einem zweiten Verfahrensschritt aufvulkanisiert. Nachteilig ist auch an dieser Durchführung der hohe apparative Aufwand sowie ein erheblicher Arbeitszeitaufwand für die Herstellung der Produkte.

In jüngerer Zeit sind neue Verfahren zur Herstellung von Verbundgegenständen auf Basis von Thermoplasten einerseits und einem Vulkanisat andererseits entwickelt worden.

Es sind insbesondere verschiedene Verfahren und Stoffkombinationen zur Herstellung von Kautschuk-Kunststoff-Verbundgegenständen bekannt, die sich für hochtemperatur- und ölbeständige, dichtende und dämpfende Formteile eignen.

Aus EP-A-0 344 427 ist es bekannt, für die Herstellung von Verbundgegenständen aus Polyamiden und Kautschukvulkanisaten Spezialkautschuke zu verwenden. Deren Charakter, d.h. deren Funktionalisierung mit Carboxyl- oder Anhydridgruppen ist für die erfolgreiche Herstellung der Verbundgegenstände nach diesem Verfahren ein essenzielles Element. Gleichzeitig müssen Polyamide verwendet werden, die mehr Amino- als Carboxylgruppen aufweisen. Den weiteren Verfahrensbedingungen, wie z.B. auch der Art der KautschukVulkanisation wird keine Bedeutung beigemessen. Die Vulkanisation wird unter Einsatz eines einzigen Peroxids durchgeführt. Nachteilig ist an diesem Verfahren, dass derartige Spezialkautschuke üblicherweise deutlich teurer als Standardkautschuke sind und sich auch die Eigenschaften dieser Spezialkautschuke von denen der Standardkautschuke unterscheiden.

In der EP-A-0 629 653 wird ein Verfahren zur Herstellung von Verbundgegenständen aus mindestens zwei fest miteinander verbundenen Teilstücken aus Vulkanisaten und Polyamiden beschrieben, wobei das Vulkanisat unter üblichen Vulkanisationsbedingungen im Kontakt mit dem Polyamidformkörper aus einer Kautschukmischung hergestellt wird, wobei diese Kautschukmischung essentiellerweise ein peroxidisches Vernetzungssystem und gleichzeitig ein doppelbindungshaltiges Silan enthält. Der Art des peroxidischen Vernetzers wird keine Bedeutung beigemessen. Eingesetzt wird jeweils ein einziges Peroxid. Die erzielten Haftfestigkeitswerte sind zwar gut, das Verfahren ist jedoch mit einigen Nachteilen behaftet. So kann bei einer höheren Konzentration von reaktiven Gruppen in der Kautschukmischung eine unerwünschte Haftung an der bei der Vulkanisation üblicherweise verwendeten Metallform auftreten. Für bestimmte Anwendungszwecke ist es darüber hinaus äußerst nachteilig, dass die Beständigkeit der verwendeten Elastomere gegenüber Ölen, Fetten, Lösungsmitteln und Kraftstoffen, wie z.B. Superbenzin, Diesel oder alkoholhaltigen Kraftstoffen, insbesondere bei höheren Temperaturen unbefriedigend ist.

Aus der DE 197 18 504 A1 ist ein Verfahren zur Herstellung eines festen Verbunds zwischen einem harten thermoplastischen Teilstück auf Basis eines Polyamids und einem weichen Teilstück aus einem vulkanisierten Fluor-Elastomeren bekannt. Kern der Erfindung ist hier der Einsatz eines Fluor-Elastomeren. Als Thermoplast kann ein Polyamid, eine Polyamidformmasse oder ein Polyamidblend eingesetzt werden. Der Verbund wird unter üblichen Vulkanisationsbedingungen durch Kontakt der Fluorkautschuk-Mischung mit dem Polyamidformkörper hergestellt. Der Art der Vulkanisation wird keine Bedeutung beigemessen. Nachteilig an diesem Verfahren ist, dass für dieses Verfahren bei einer ein- oder zweistufigen Durchführung typische Zykluszeiten (Taktzeiten) für die Kautschukvulkanisation gewählt werden müssen, die deutlich größer als die Zykluszeiten von reinem Thermoplastspritzguss sind, und damit die Wirtschaftlichkeit des Verfahrens beeinträchtigt wird.

Aus DE 199 14 162 A1 sind Verbundgegenstände aus Polyester und Silikonkautschuk bekannt. Diese Verbundgegenstände werden hergestellt, indem man eine Kautschukzusammensetzung auf Basis eines Silikonkautschuks unter üblichen Vulkanisationsbedingungen im Kontakt mit der thermoplastischen, harten Polyester-Komponente vulkanisiert, wobei wahlweise die harte thermoplastische und/oder die weiche Kautschuk-Komponente zusätzlich 0,25 bis 12 Gew. Teile eines di- oder polyfunktionellen Maleinimids enthält. Der Art des Vernetzers wird keine Bedeutung beigemessen. Eingesetzt wird jeweils ein einziges Peroxid. Die Gegenwart des Maleinimids ist essenziell für den Erhalt eines festen Verbunds zwischen den Komponenten. Der Verbundgegenstand kann unter anderem durch ein einstufiges Extrusionsverfahren durch Coextrusion von Thermoplast und Kautschukmasse hergestellt und anschließend vulkanisiert werden. Auch ein einstufiges Spritzgießverfahren kann eingesetzt werden. Nachteilig an diesem Verfahren ist, dass auf diese Weise erhaltene Komposite vor allem bedingt durch die Verwendung des Silikonkautschuks nur eine begrenzte Ölbeständigkeit aufweisen.

Aus DE 195 40 333 A1 ist eine haftvertmittlerfreie Verbindung zwischen einem Thermoplasten, bevorzugt einem Polyester, und einem Kautschuk, bevorzugt einem Silikonkautschuk, bekannt. Hierbei wird das Teilstück der harten thermoplastischen Komponente in dem Bereich, in dem die Verbindung mit dem Silikonkautschuk vorgenommen werden soll, mit einem Korona-Verfahren behandelt. Dies bedeutet jedoch einen umständlichen Vorbehandlungsschritt, der dazu führt, dass das Kunststoffteil erst aus der Form genommen werden muss, dann koronabehandelt und dann wieder in das Werkzeug eingelegt wird.

Aus der WO-A-03/000492 sind mehrschichtige Verbundformteile bestehend aus einem Körper aus vernetztem Elastomer und einer Beschichtung aus thermoplastischem Elastomer bekannt. Als thermoplastisches Elastomer werden thermoplastische Olefine (TPO) bevorzugt, also Mischungen aus einem thermoplastischen semi-kristallinen Polyolefin (PE oder PP) und einer Kautschukkomponente, wie z.B. EPDM. Als vernetztes Elastomer wird in den Beispielen EPDM eingesetzt, das mit einem Vernetzerpaket, bestehend aus zwei Peroxiden unterschiedlicher Halbwertszeit mit den Handelsnamen Perkadox^{®} 14/40 und Trigonox^{®} 29/40, vernetzt wurde.

Aus der DE 102 27 636 A1 ist ferner ein Verfahren zur Herstellung mehrkomponentiger Kunststoff-Formteile bekannt. Hierbei wird zur Herstellung mindestens einer Komponente des mehrkomponentigen Kunststoff-Formteils ein In-Mould Compounder verwendet. Dieser umfasst typischerweise einen Extruder, in dem das Kunststoffmaterial plastifiziert wird, und einen Einspritzzylinder, in den das plastifizierte Kunststoffmaterial, gegebenenfalls unter Zwischenschaltung eines Druckspeichers, eingespeist wird und anschließend aus dem Einspritzzylinder in eine Form eingespritzt wird. Die Herstellung der Mehrkomponentenanteile mit Kernen oder Lagen aus Fasergewebe oder -vlies wird unter Einsatz einer Wendplattenmaschine mit zwei Arbeitsbereichen A und B durchgeführt. Dabei wird das Fasermaterial in einem Arbeitsbereich A in einer Werkzeugkavität zu einem Vorformling umgeformt, und gleichzeitig ("im gleichen Zyklus") wird ein in einem vorhergehenden Zyklus aus Fasermaterial gefertigter Vorformling im Arbeitsbereich B mit Kunststoff umspritzt oder Kunststoff wird angespritzt. Anschließend wird die Wendeplatte um eine Axialachse verdreht, so dass der Vorformling vom Arbeitsbereich A in den Arbeitsbereich B transportiert wird, während das fertige Kunststoff-Formteil entnommen wird und der Herstellungstakt von vorn beginnt.

Außer derartigen Wendeplatten Werkzeugen sind auch Werkzeuge mit Schieber- oder Drehteller-Elementen bekannt, die eine ähnliche Herstellung von mehrkomponentigen Formteilen in einem Zyklus erlauben. Hierfür kommen Mehrkomponentennaschinen zum Einsatz, die in den verschiedensten Ausführungen erhältlich sind, z.B bezüglich der Aggregatanordnung in der (V,L,R,P-Stellung), zur Ausführung von Bi-injektion-, Coreback-, Umsetz- oder Drehtechniken oder auch zur Ausführung von Sandwichverfahren.

Werden in derartig getakteten Verfahren mehrkomponentige Formteile hergestellt, die eine Kunststoff- und eine Kautschuk-Komponente aufweisen, so erweist es sich als sehr nachteilig für die Zykluszeit (die auch als Taktzeit bezeichnet werden kann), dass für die Vulkanisation der Kautschukkomponente ein deutlich längerer Zeitraum von Nöten ist, der die Zykluszeit somit limitiert. Die dadurch verursachten längeren Zykluszeiten beinträchtigen die Wirtschaftlichkeit des Verfahrens stark: Vulkanisationszeiten von mehreren Minuten sind die Regel, auf die weitere Prozesszeiten, wie z.B. für die-Werkzeugöffnungsbewegungen, zu addieren sind. Daher werden diese Verfahren nur in sehr geringem Maße für die Herstellung von Kunststoff-Kautschuk-Formteile angewendet.

Das Interesse an mehrkomponentigen Kunststoff-Kautschuk-Formteilen mit guter Temperatur- und Ölbeständigkeit ist für bestimmte Anwendungen sehr hoch, vor allem im Automobilbereich. Bedarf besteht z.B. nach abdichtenden Funktionselementen des Kühl- und Ölkreislaufes oder nach Bauteilen und Bauteilgruppen, die eine sogenannte Hart-Weich-Charakteristik aufweisen sollen, in Kontakt zu verschiedenen Medien stehen und dabei höheren Temperatur ausgesetzt sind. Als Beispiele hierfür sind Ölwannen mit umlaufender Dichtung, Gehäuse- und Ventildeckel mit umlaufender Dichtung, Thermostatgehäuse und andere Baugruppen des Kühlers mit umlaufender Dichtung und ferner auch Strukturbauteile mit Dämpfelementen zu nennen.

Die Aufgabe der vorliegenden Erfindung bestand somit darin, ein Mehrkomponenten-System basierend auf einer Kunststoff- und einer Kautschuk-Komponente bereitzustellen, welches die Herstellung von Kunststoff-Kautschuk-Verbundgegenständen auch in einem Zyklus ermöglicht und dies vor allem mit solchen Zykluszeiten, die den Zykluszeiten bei ausschließlichem Einsatz von Thermoplasten vergleichbar sind. Die Aufgabe bestand ferner darin, ein solches Mehrkomponenten-System bereitzustellen, dass nicht zwingend den Einsatz zusätzlicher Haftvermittler erfordert und dabei hochtemperatur- sowie ölbeständige Kunststoff Kautschuk-Verbundgegenstände liefert.

Diese Aufgabe wurde gelöst durch die Kombination einer Thermoplast-Komponente mit einer speziellen Kautschuk-Komponente, die eine Kombination von mindestens zwei Peroxid-Vernetzern enthält.

**Gegenstand der Erfindung** ist ein Mehrkomponenten-System umfassend
1) eine Thermoplast-Komponente und
2) eine Kautschuk-Komponente enthaltend
   a) ein oder mehrere Elastomere,
      wobei diejenigen Elastomere, die mit 30 Gew.% oder mehr in der Kautschuk-Komponente enthalten sind, bezogen auf 100 Gew.% als Summe aller Elastomeren der Kautschuk-Komponente, peroxidisch vulkanisierbar sein müssen, und
   b) zwei oder mehrere peroxidische Vernetzer, wobei mindestens ein peroxidischer Vernetzer mit einer Zerfallstemperatur T_{1/2} (1h) im Bereich von 70 bis 130°C und mindestens ein zweiter peroxidischer Vernetzer mit einer Zerfallstemperatur T_{1/2} (1h) im Bereich von 120 bis 160 °C verwendet wird, wobei mindestens zwei peroxidische Vernetzer enthalten sind, die einen Unterschied in der Zerfallstemperatur T_{1/2} (1h) von mindestens 5°C aufweisen,

wobei die in der Thermoplast-Komponente 1) enthaltenen ein oder mehrere Thermoplaste ausgewählt sind aus der Gruppe bestehend aus ein oder mehreren Polyamiden, Polyimiden, Polyethern, Polyestern, Polyphenylensulfid (PPS), Polycarbonaten und Kombinationen der Vorgenannten.

Überraschenderweise ist es gerade durch die Kombination dieser Einzelkomponenten in dem erfindungsgemäßen Mehrkomponenten-System möglich, eine Verarbeitung zu Kunststoff-Kautschuk Formteilen durchzuführen, die mit Zykluszeiten abläuft, die denjenigen gängiger Kunststoff-Formteile entsprechen. Die dabei erhaltenen Kunststoff-Kautschuk-Verbund-Formteile zeichnen sich durch Hochtemperatur- und Ölbeständigkeit aus und finden beispielsweise als exzellent dichtende und/oder dämpfende Bauteile Anwendung.

### Thermoplast-Komponente 1)

Die in der Thermoplast-Komponente 1) in dem erfindungsgemäßen Mehrkomponentensystem enthaltenen ein oder mehreren Thermoplaste sind ausgewählt aus der Gruppe bestehend aus ein oder mehreren Polyamiden, Polyimiden, Polyethern, Polyestern, Polyphenylensulfiden (PPS), Polycarbonaten und Kombinationen der Vorgenannten. Möglich ist der Einsatz eines einzelnen Thermoplasten oder aber auch die Kombination verschiedener der vorgenannten Thermoplaste.

Den zuvor genannten Thermoplasten ist eine Erweichungstemperatur größer gleich 180°C gemeinsam. Bevorzugt werden in der Thermoplast-Komponente 1) solche Thermoplasten mit einer Erweichungstemperatur größer gleich 200°C eingesetzt.

Besonders bevorzugt werden in der Thermoplast-Komponente 1) ein oder mehrere Polyamide mit einer Erweichungstemperatur größer gleich 200 °C, insbesondere größer gleich 210°C eingesetzt.

Die erfindungsgemäß bevorzugt einzusetzenden thermoplastischen Polyamide können nach verschiedenen Verfahren hergestellt und aus sehr unterschiedlichen Bausteinen synthetisiert werden. Sie können allein eingesetzt werden oder auch als Polyamidformmassen, d.h. in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern) zwecks spezieller Einstellung von Eigenschaftskombinationen.

Geeignet sind auch Blends von Polyamiden mit Anteilen anderer Polymere, z.B. von Polyethylen, Polypropylen, ABS (Acrylnitril-Butadien-Styrol-Copolymer), wobei gegebenenfalls ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit von verstärkten Polyamiden. Die Vielzahl der Kombinationsmöglichkeiten ermöglicht eine sehr große Zahl von Thermoplast-Komponenten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Besonders bevorzugte Polyamide sind teilkristalline Polyamide, die ausgehend von Diaminen und Dicarbonsäuren und/oder Lactamen mit wenigstens fünf Ringgliedern oder entsprechenden Aminosäuren hergestellt werden können.

Als Monomere können einerseits aliphatische und/oder aromatische Dicarbonsäuren wie Adipinsäure, 2,2,4- und 2,4,4-Trimethyladipinsäure, Azelainsäure, Sebazinsäure, Isophthalsäure oder Terephthalsäure zum Einsatz kommen. Als Monomere kommen andererseits aliphatische und/oder aromatische Diamine wie z.B. Tetramethylendiamin, Hexamethylendiamin, 1,9-Nonandiamin, 2,2,4- und 2,4,4-Trimethyl-hexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren, wie z.B. Aminocapronsäure, oder die entsprechenden Lactame in Betracht. Copolyamide aus mehreren der genannten Monomeren sind eingeschlossen.

Für die erfindungsgemäßen Mehrkomponenten-Systeme werden besonders bevorzugt auf Caprolactamen, insbesondere ε-Caprolactam, basierende Polyamide sowie auf PA6, PA66 und auf anderen aliphatischen und/oder aromatischen Polyamiden bzw. Copolyamiden basierende Compounds, bei denen auf eine Polyamidgruppe in der Polymerkette 3 bis 11 Methylengruppen kommen, eingesetzt.

Die erfindungsgemäß einzusetzenden teilkristallinen Polyamide können auch im Gemisch mit anderen Polyamiden und/oder weiteren der zuvor definierten Thermoplaste eingesetzt werden.

Den Polyamiden können übliche Additive in der Schmelze zugemischt oder auf der Oberfläche aufgebracht werden.

Übliche Additive sind z.B. Stabilisatoren (wie UV-Stabilisatoren, Thermostabilisatoren oder Gammastrahlenstabilisatoren), Antistatika, Fließhilfsmittel, Entformungsmittel, Flammschutzadditive, Emulgatoren, Nukleierungsmittel, Weichmacher, Gleitmittel, Farbstoffe, Pigmente sowie auch Additive zur Erhöhung der elektrischen Leitfähigkeit. Die Additive können alleine oder in Mischung bzw. in Form von Masterbatchen eingesetzt werden.

Als Stabilisatoren können zum Beispiel Metallsalze, insbesondere Kupferverbindungen, sterisch gehinderte Phenole, Hydrochinone, aromatische sekundäre Amine wie z.B. Diphenylamine, substituierte Resorcine, Salicylate, Benzotriazole und Benzophenone, sowie verschiedene substituierte Vertreter dieser Gruppen und deren Mischungen eingesetzt werden.

Als Fließhilfsmittel können beispielsweise niedermolekulare Verbindungen oder verzweigte, hochverzweigte oder dendritische Polymere mit einer dem Polymerharz ähnlichen Polarität eingesetzt werden oder auch Copolymerisate von Olefinen mit Methacrylsäureestern oder Acrylsäureestern aliphatischer Alkohole, die einen MFI (Melt Flow Index) von 50 g/10 min nicht unterschreiten.

Als Pigmente bzw. Farbstoffe können z.B. Titandioxid, Zinksulfid, Ultramarinblau, Eisenoxid, Ruß, Phthalocyanine, Chinacridone, Perylene, Nigrosin oder Anthrachinone eingesetzt werden.

Als Nukleierungsmittel können z.B. Natrium- oder Calciumphenylphosphinat, Aluminiumoxid, Siliziumdioxid sowie bevorzugt Talkum eingesetzt werden.

Als Gleit- und Entformungsmittel können z.B. Esterwachse, Pentaerytritoltetrastearat (PETS), langkettige Fettsäuren (z.B. Stearinsäure oder Behensäure) und Ester, deren Salze (z.B. Ca- oder Zn-Stearat) sowie Amidderivate (z:B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Als Additive zur Erhöhung der elektrischen Leitfähigkeit können Ruße, Leitfähigkeitsruße, Carbonfibrillen, nanoskalige Grafit- und Kohlenstofffasern, Graphit, leitfähige Polymere, Metallfasern sowie andere übliche Additive zur Erhöhung der elektrischen Leitfähigkeit zugesetzt werden.

Als nanoskalige Fasern können bevorzugt sogenannte "single wall Kohlenstoff-Nanotubes" oder "multi wall Kohlenstoff-Nanotubes" (z.B. der Firma Hyperion Catalysis) eingesetzt werden.

In den erfindungsgemäß einzusetzenden Polyamiden kann ein Füll- oder Verstärkungsstoff enthalten sein. Als Füllstoff oder Verstärkungsstoff können auch Mischungen aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden.

Bevorzugt werden mineralische, teilchenförmige Füllstoffe auf der Basis von Talk, Glimmer, Silikat, Quarz, Titandioxid, Wollastonit, Kaolin, amorphen Kieselsäuren, Magnesiumcarbonat, Kreide, Feldspat, Bariumsulfat und/oder Glasfasern eingesetzt. Besonders bevorzugt werden mineralische, teilchenförmige Füllstoffe auf der Basis von Talk, Wollastonit, Kaolin und/oder Glasfasern eingesetzt.

Der Füllstoff und/oder Verstärkungsstoff kann gegebenenfalls oberflächenmodifiziert sein, beispielsweise mit einem Haftvermittler oder einem Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind beispielsweise Silanverbindungen der allgemeine Formel (I)

(I) (X-(CH₂)_{q})ₖ-Si-(O-CᵣH₂ᵣ₊₁)₄₋ₖ

in der die Substituenten folgende Bedeutung haben:
- X: für NH₂-, HO- oder 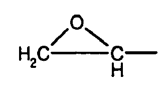 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.- % bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d₉₇- bzw. d₅₀-Wert aufweisen als die ursprünglich eingesetzten Füllstoffe. Die Durchmesserangaben d₉₇- bzw. d₅₀ bedeuten, dass 97 bzw. 50 Gew. % der Teilchen einen Durchmesser besitzen, der kleiner als der angegebene Wert ist, wobei die Teilchengrößenverteilung mittels Ultrazentrifugation ermittelt wird.

Die Glasfasern können bedingt durch die Verarbeitung zur Formmasse bzw. Formkörper in der Formmasse bzw. im Formkörper kürzere Längenverteilungen als ursprünglich eingesetzt aufweisen.

Die Thermoplast-Komponente zeichnet sich durch hohe Formbeständigkeit auch bei hohen Temperaturen bei einer gleichzeitig hohen Fließfähigkeit aus. Des Weiteren besitzt die Kunststoffkomponente eine hohe Ölbeständigkeit in gängigen Motorenölen sowie industriellen und in Kraftfahrzeugen gebräuchlichen Medien.

### Komponente 2) (Kautschukkomponente)

Die Kautschuk-Komponente 2) in dem erfindungsgemäßen Mehrkomponentensystem enthält eine oder mehrere Elastomere, wobei diejenigen Elastomere, die mit 30 Gew.-% oder mehr in der Kautschuk-Komponente enthalten sind, bezogen auf 100 Gew.% als Summe aller in der Kautschuk-Komponente enthaltenen Elastomere, peroxidisch vulkanisierbar sein müssen.

Als Elastomere können beispielsweise die folgenden eingesetzt werden:
- Nitrilkautschuk (auch als NBR abgekürzt)
- Hydrierter Nitrilkautschuk (auch als HNBR abgekürzt)
- EVM
- EPDM
- AEM
- ACM
- Fluorkautschuk
- Chloroprenkautschuk
- Chloriertes Polyethylen (CM)

### Nitrilkautschuke (NBR)

Unter **Nitrilkautschuken,** die auch als NBR abgekürzt werden, werden im Rahmen dieser Anmeldung Co- oder Terpolymere verstanden, welche Wiederhölungseinheiten mindestens eines konjugierten Diens, mindestens eines α,β-ungesättigten Nitrils und gegebenenfalls einer oder mehrerer weiterer copolymerisierbarer Monomere enthalten.

Das **konjugierte Dien kann** von jeder Natur sein. Bevorzugt werden C₄-C₆-konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind C₃-C₅-α,β-ungesättigte Nitrile wie Acrylnitril, Methacrylnitril, Ethacrylnitril oder Mischungen davon. Besonders bevorzugt ist Acrylnitril.
Einen besonders bevorzugten Nitrilkautschuk stellt ein Copolymer aus Acrylnitril und 1,3-Butadien dar.

Neben dem konjugierten Dien und dem α,β-ungesättigten Nitril können noch ein oder mehrere weitere dem Fachmann bekannte Monomere eingesetzt werden, z.B. α,β-ungesättigte Mono- oder Dicarbonsäuren, deren Ester oder Amide. Als α,β-ungesättigte Mono- oder Dicarbonsäuren sind dabei Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Alkylester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxyalkylester der α,β-ungesättigten Carbonsäuren sind Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten.

Die Anteile an konjugiertem Dien und α,β-ungesättigtem Nitril in den einzusetzenden NBR-Polymeren können in weiten Bereichen schwanken. Der Anteil des oder der Summe der konjugierten Diene liegt üblicherweise im Bereich von 40 bis 90 Gew.%, bevorzugt im Bereich von 55 bis 75 Gew. %, bezogen auf das Gesamtpolymer. Der Anteil des oder der Summe der α,β-ungesättigten Nitrile liegt üblicherweise bei 10 bis 60 Gew.-%, bevorzugt bei 25 bis 45 Gew.-%, bezogen auf das Gesamtpolymer. Die Anteile der Monomere summieren sich jeweils zu 100 Gew.% auf. Die zusätzlichen Monomere können in Mengen von 0,1 bis 40 Gew.%, bevorzugt 1 bis 30 Gew.-%, bezogen auf das Gesamtpolymer, vorliegen. In diesem Fall werden entsprechende Anteile des oder der konjugierten Diene bzw. des oder der α,β-ungesättigten Nitrile durch die Anteile der zusätzlichen Monomere ersetzt, wobei sich die Anteile aller Monomere jeweils zu 100 Gew.% aufsummieren.

Die Herstellung der Nitrilkautschuke durch Polymerisation der vorgenannten Monomere ist dem Fachmann hinlänglich bekannt und in der Literatur (z.B. Houben-Weyl, Methoden der Organischen Chemie Bd.14/1, Georg Thieme Verlag Stuttgart 1961) umfangreich beschrieben.

Nitrilkautschuke, die im erfindungsgemäßen Sinn verwendet werden können, sind ferner käuflich erhältlich, z.B. als Produkte aus der Produktreihe der Marken Perbunanα^{®} und Krynac® von der Lanxess Deutschland GmbH.

### Hydrierte Nitrilkautschuke (HnBR):

Unter hydrierten Nitrilkautschuken sind im Rahmen dieser Anmeldung Co- oder Terpolymere auf der Basis mindestens eines konjugierten Diens und mindestens eines α,β-ungesättigten Nitrils und gegebenenfalls weitere copolymerisierbare Monomere zu verstehen, bei denen die C=C Doppelbindungen der einpolymerisierten Dieneinheiten ganz oder teilweise hydriert sind. Der Hydriergrad der einpolymerisierten Dieneinheiten liegt üblicherweise in einem Bereich von 50 bis 100%, bevorzugt 85 bis 100%, besonders bevorzugt 95 bis 100%.

Das **konjugierte Dien** kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Neben dem konjugierten Dien und dem α,β-ungesättigten Nitril können noch ein oder mehrere weitere dem Fachmann bekannte Monomere eingesetzt werden, z.B. α,β-ungesättigte Mono- oder Dicarbonsäuren, deren Ester oder Amide. Als α,β-ungesättigte Mono- oder Dicarbonsäuren sind dabei Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Alkylester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxyalkylester der α,β-ungesättigten Carbonsäuren sind Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten.

Die Anteile an konjugiertem Dien und α,β-ungesättigtem Nitril in den einzusetzenden hydrierten Nitrilkautschuken können in weiten Bereichen schwanken. Der Anteil des oder der Summe der konjugierten Diene liegt üblicherweise im Bereich von 40 bis 90 Gew.% und bevorzugt im Bereich von 50 bis 80 Gew. %, bezogen auf das Gesamtpolymer. Der Anteil des oder der Summe der α,β-ungesättigten Nitrile liegt üblicherweise bei 10 bis 60 Gew.-%, bevorzugt bei 20 bis 50 Gew.-%, bezogen auf das Gesamtpolymer. Die zusätzlichen Monomere können in Mengen von 0,1 bis 40 Gew.%, bevorzugt 1 bis 30 Gew.-%, bezogen auf das Gesamtpolymer, vorliegen. In diesem Fall werden entsprechende Anteile des oder der konjugierten Diene bzw. des oder der α,β-ungesättigten Nitrile durch die Anteile der zusätzlichen Monomere ersetzt, wobei sich die Anteile aller Monomere jeweils zu 100 Gew.% aufsummieren.

Die Herstellung solcher hydrierter Nitrilkautschuke, die für das erfindungsgemäße Mehrkomponenten-System geeignet sind, ist dem Fachmann hinlänglich geläufig.

Die zunächst erfolgende Herstellung der Nitrilkautschuke durch Polymerisation der vorgenannten Monomere ist in der Literatur (z.B. Houben-Weyl, Methoden der Organischen Chemie Bd. 14/1, Georg Thieme Verlag Stuttgart 1961) umfangreich beschrieben.

Die Mooney-Viskosität der in den erfindungsgemäßen Mehrkomponenten-Systemen eingesetzten hydrierten Nitrilkautschuke (ML 1+4 @ 100 °C) liegt im Bereich von 1 bis 120 ME, bevorzugt im Bereich von 5 bis 80 ME besonders bevorzugt im Bereich von 10-70 ME (ME = Mooneyeinheiten). Die Bestimmung der Mooney-Viskosität erfolgt dabei gemäß ASTM Norm D 1646.

Die in den Mehrkomponenten-Systemen verwendbaren hydrierten Nitrilkautschuke besitzen üblicherweise ein Zahlenmittel des Molekulargewicht Mₙ im Bereich von 35.000 bis 300.000, bevorzugt im Bereich von 60.000 bis 300.000 und besonders bevorzugt im Bereich von 60.000 bis 250.000 und insbesondere bevorzugt im Bereich von 80.000 bis 200.000 und ganz besonders bevorzugt im Bereich von 70.000 bis 200.000. Sie besitzen ferner üblicherweise einen Polydispersitätsindex D= M_{w}/Mₙ, wobei M_{w} das Gewichtsmittel und Mₙ das Zahlenmittel des Molekulargewichts darstellt, im Bereich von 1,5 bis 4, bevorzugt im Bereich von 2 bis 4, besonders bevorzugt im Bereich von 2 bis 3,7 und insbesondere im Bereich von 2,2 bis 3,3 und ganz besonders bevorzugt im Bereich von 2,2 bis 3,0.

Derartige hydrierte Nitirilkautschuke sind im Handel erhältlich. Beispiele für hydrierte Nitrilkautschuke sind voll- und teilhydrierte Nitrilkautschuke mit Acrylnitrilgehalten im Bereich von 20 bis 50 Gew.% (Therban^{®}-Palette der Lanxess Deutschland GmbH sowie Zetpol^{®}-Palette der Nippon Zeon Corporation). Beispiele für hydrierte Butadien/Acrylnitril/Acrylat-Polymere ist die Therban®LT-Serie der Lanxess Deutschland GmbH, beispielsweise Therban®LT 2157 sowie Therban^{®}VP KA 8882. Ein Beispiel für carboxylierte hydrierte Nitrilkautschuke ist die Therban^{®}XT-Serie der Lanxess Deutschland GmbH. Beispiele für hydrierte Nitrilkautschuke mit geringen Mooney-Viskositäten und daher verbesserter Verarbeitbarkeit ist ein Produkt aus der Therban^{®} AT-Serie, beispielweise Therban AT VP KA 8966.

### Ethylen- Vinylacetat-Copolymere (EVM)

Als Elastomer(e) können in der Komponente 2) des erfindungsgemäßen Mehrkomponenten-Systems auch ein oder mehrere Ethylen-Vinylacetat-Copolymere auf der Basis von Ethylen und Vinylacetat als Monomere enthalten sein. Üblicherweise kann der Ethylengehalt im Bereich von 5 bis 70 Gew.% liegen, der Vinylacetat-Anteil im Bereich von 95 bis 30 Gew.%.

Ethylen-Vinylacetat-Copolymere, die im erfindungsgemäßen Sinn verwendet werden können, sind käuflich erhältlich, z.B. als Produkte aus der Produktreihe der Marken Levapren^{®} und Levamelt^{®} von der Lanxess Deutschland GmbH, oder aber auch nach dem Fachmann geläufigen Methoden herstellbar.

### EPDM Kautschuke

Als Elastomer(e) können in der Komponente 2) des erfindungsgemäßen Mehrkomponenten-Systems auch ein oder mehrere EPDM Kautschuke enthalten sein.

Hierbei handelt es sich um Polymere, die durch Terpolymerisation von Ethylen und größeren Anteilen Propylen sowie einigen Gew.% eines dritten Monomeren mit Dien-Struktur hergestellt werden. Das Dien-Monomer stellt dabei die für eine sich gegebenenfalls anschließende Vulkanisation benötigten Doppelbindungen bereit. Als Dien-Monomere finden vorwiegend cis,cis-1,5-Cyclooctadien (COD), exo-Dicyclopentadien (DCP), *endo-*Dicyclopentadien (EDCP), 1,4-Hexadien (HX) und auch 5-Ethyliden-2-norbomen (ENB) Verwendung.

EPDM Kautschuke, die im erfindungsgemäßen Sinn verwendet werden können, sind käuflich erhältlich, z.B. als Produkte aus der Produktreihe der Marke Buna EPG^{®} und Buna EPT^{®} von der Lanxess Deutschland GmbH, oder aber auch nach dem Fachmann geläufigen Methoden herstellbar.

In den erfindungsgemäßen Mehrkomponenten-Systemen können in der Kautschuk-Komponente auch solche EPDM und EVM Kautschuke eingesetzt werden, welche durch Pfropfung anderer Monomere wie beispielsweise Maleinsäureanhydrid, Maleinsäureanhydridhalbester, Acryl- oder Methacrylsäure oder durch Umsetzung mit Silanen (Hydrosilylierung/Umesterung) modifiziert sind.

### AEM

Als Elastomer(e) können in der Komponente 2) des erfindungsgemäßen Mehrkomponenten-Systems auch ein oder mehrere AEM Kautschuke enthalten sein. Hierbei handelt es sich um Ethylen-Acrylat Kautschuke mit gegebenenfalls weiteren Termonomeren.

AEM Kautschuke, die im erfindungsgemäßen Sinn verwendet werden können, sind käuflich erhältlich, z.B. als Produkte aus der Produktreihe der Marke Vamac^{®} von DuPont™ oder aber auch nach dem Fachmann geläufigen Methoden herstellbar.

### ACM

Als Elastomer(e) können in der Komponente 2) des erfindungsgemäßen Mehrkomponenten-Systems auch ein oder mehrere ACM Kautschuke enthalten sein. Hierbei handelt es sich um Polyacrylate, d.h. ein Copolymer bzw. Terpolymer aus Ethylacrylat und anderen Acrylaten mit einem gewissen Anteil eines Monomers, welches die Vulkanisation ermöglicht. ACM wird mittels radikalisch initierter Emulsionspolymerisation hergestellt.

ACM Kautschuke, die im erfindungsgemäßen Sinn verwendet werden können, sind käuflich erhältlich, z.B. als Produkte aus der Produktreihe der Marke Hytemp^{®} und Nipol AR^{®} von Zeon Chemicals L.P.oder aber auch nach dem Fachmann geläufigen Methoden herstellbar

### Peroxidische Vernetzer

Die Kautschuk-Komponente 2) des erfindungsgemäßen Mehrkomponentensystems enthält neben ein oder mehreren Elastomeren zwei oder mehr peroxidische Vernetzer, wobei mindestens ein peroxidischer Vernetzer mit einer Zerfallstemperatur T_{1/2} (1h) im Bereich von 70 bis 130°C, bevorzugt im Bereich von 100 bis 125°C, und mindestens ein zweiter peroxidischer Vernetzer mit einer Zerfallstemperatur T_{1/2} (1h) im Bereich von 120 bis 160°C, bevorzugt im Bereich von 130 bis 150°C, verwendet wird, wobei mindestens zwei Peroxide enthalten sind, die einen Unterschied in der Zerfallstemperatur T_{1/2} (1h) von mindestens 5°C aufweisen.

Der Begriff Zerfallstemperatur T_{1/2} (1h) ist dem Fachmann geläufig und bedeutet die Temperatur; bei der sich nach einer Stunde die Hälfte des peroxidischen Vernetzers zersetzt hat.

Als peroxidische Vernetzer mit einer Zerfallstemperatur T_{1/2} (1h) im Bereich von 70 bis 130°C kommen beispielsweise die folgenden in Frage:
- Bis(2,4-dichlorbenzyl)peroxid
- Dibenzoylperoxid
- Bis(4-chlorbenzoyl)peroxid
- 1,1-Bis-(t-butylperoxy)-3,3,5-trimethylcylohexan
- tert-Butylperbenzoat
- 2,2 Bis(t-butylperoxy) buten und
- 4,4-di-tert.Butyl peroxynonylvalerat

Als peroxidische Vernetzer mit einer Zerfallstemperatur T_{1/2} (1h) im Bereich von 120 bis 160°C kommen beispielsweise die folgenden in Frage:
- tert-Butylperbenzoat
- 2,2 Bis(t-butylperoxy)-buten
- 4,4-di-tert.Butylperoxynonylvalerat
- Dicumylperoxid
- 2,5-Dimethyl-2,5-di(t-butylperoxy)-hexan
- tert-Butylcumylperoxid
- 1,3-Bis(t-butylperoxy isopropyl)-benzol
- Di-t-butylperoxid und
- 2,5-Dimethyl-2,5-di(t-butylperoxy)-hexyn-3.

Geeignet ist beispielsweise der Einsatz einer Kombination aus 1,3-Bis-(t-butylperoxy isopropyl)-benzol und 1,1-Bis-(t-butylperoxy)-3,3,5-trimethylcylohexan, aus tert.-Butylperbenzoat und Di-t-butylperoxid, aus 1,3-Bis-(t-butylperoxy isopropyl)-benzol und Di-t-butylperoxid sowie aus tert.-Butylperbenzoat und tert.-Butylcumylperoxid als peroxidischen Vernetzern.

Es kann vorteilhaft sein, neben diesen peroxidischen Vernetzern noch weitere Aktivatoren einzusetzen: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimetylolpropantrimethacrylat, Zn-diacrylat, Zn-dimethacrylat, 1,2-Polybutadien oder N,N-'m-phenylendimaleinimid geeignet.

Der peroxidische Vernetzer mit einer Zerfallstemperatur T_{1/2} (1h) im Bereich von 70 bis 130°C wird üblicherweise mit 1 bis 10 phr, bevorzugt mit 2 bis 8 phr und besonders bevorzugt mit 3 bis 6 phr, bezogen auf die Summe der Elastomere in der Kautschuk-Komponente (2) des erfindungsgemäßen Mehrkomponenten-Systems eingesetzt.

Der peroxidische Vernetzer mit einer Zerfallstemperatur T_{1/2} (1h) im Bereich von 120 bis 160°C wird üblicherweise mit 1 bis 10 phr, bevorzugt mit 2 bis 8 phr und besonders bevorzugt mit 3 bis 6 phr, bezogen auf die Summe der Elastomere in der Kautschuk-Komponente (2) des erfindungsgemäßen Mehrkomponenten-Systems eingesetzt.

Die Gesamtmenge an peroxidischen Vernetzern liegt üblicherweise im Bereich von 2 bis 20 phr, bevorzugt 4 bis 18 phr und besonders bevorzugt 6 bis 16 phr, bezogen auf die Summe der Elastomere in der Kautschuk-Komponente (2) des erfindungsgemäßen Mehrkomponenten-Systems.

Die Kautschuk-Komponente 2) des erfindungsgemäßen Mehrkomponentensystems kann neben ein oder mehreren Elastomeren sowie den genannten peroxidischen Vernetzern auch übliche Kautschukadditive enthalten.

Diese schließen beispielsweise ein:
Füllstoffe, Füllstoffaktivatoren, Beschleuniger, Ozonschutzmittel, Antioxidationsmittel, Verarbeitungshilfsmittel, Extenderöle, Weichmacher, Verstärkungsmaterialien, Formtrennmittel sowie Anvulkanisationshemmer.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes ,Teflon (letzteres bevorzugt in Pulverform),oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyltrimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr der Elastomere(n) in der Kautschuk-Komponente 2).

Als **Alterungsschutzmittel** kommen insbesondere solche in Frage, die bei der peroxidischen Vulkanisation möglichst wenig Radikale abfangen. Dies sind insbesondere oligomerisiertes 2,2,4-Trimethyl-1,2-dihydro-chinolin (TMQ), styrolisiertes Dipenylamin (DDA), octyliertes Diphenylamin (OCD) oder Zinksalz von 4- und 5-Methylmercaptobenzimidazol (ZMB2). Daneben können auch die bekannten phenolischen Alterungsschutzmittel eingesetzt werden, wie sterisch gehinderte Phenole bzw. Alterungsschutzmittel auf Basis von Phenylendiaminen. Es können auch Kombinationen der genannten Alterungsschutzmittel eingesetzt werden.

Die **Alterungsschutzmittel** werden üblicherweise in Mengen von ca. 0 bis 5 phr, bevorzugt 0,5 bis 3phr, bezogen auf 100 phr der Elastomer(e) in der Kautschuk-Komponente 2) eingesetzt.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr der Elastomer(e) in der Kautschuk-Komponente 2) eingesetzt.

Auch die Verstärkung der Vulkanisate mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon® Aramid®), Polyestern und Naturfaserprodukten.

Eine beispielhafte Aufstellung von in der Kautschukindustrie üblichen Beimengungen findet man z.B. im SGF Rubber Handbook des schwedischen Instituts für Gummi Technologie, 10 Auflage.

Die Kautschuk-Komponente 2) des erfindungsgemäßen Mehrkomponenten-Systems zeichnet sich durch eine besondere Fließfähigkeit sowie gleichzeitig Ölbeständig- und Hochtemperaturbeständigkeit aus.

In einer bevorzugten Ausführungsform umfasst das Mehrkomponenten-System
1) eine Thermoplast-Komponente, wobei die darin enthaltenen ein oder mehrere Thermoplaste ausgewählt sind aus der Gruppe bestehend aus einem oder mehreren Polyamiden, Polyimiden, Polyethern, Polyestern, PPS, Polycarbonaten und Kombinationen der Vorgenannten, wobei diese Thermoplasten eine Erweichungstemperatur von gleich oder größer 180°C besitzen sowie
2) eine Kautschuk-Komponente enthaltend:
   a) einen oder mehrere peroxidisch vernetzbare hydrierte Nitrilkautschuke und/oder ein oder mehrere peroxidisch vernetzbare Vinylacetat-Ethylen-Copolymere und/oder ein oder mehrere peroxidisch vernetzbare Acrylat-Ethylen Copolymere und/oder ein oder mehrere peroxidisch vernetzbare Acrylat(co)polymere und/oder ein oder mehrere peroxidisch vernetzbare Nitrilkautschuke und/oder ein oder mehrere peroxidisch vernetzbare Chloroprenkautschuke und/oder ein oder mehrere peroxidisch vernetzbare Fluorkautschuke und/oder peroxidisch vernetzbares chloriertes Polyethylen und gegebenenfalls weitere, andere Elastomere, wobei alle vorgenannten Elastomere im Falle eines Einsatzes in einer Menge von 30 Gew.% oder mehr, bezogen auf 100 Gew% aller Elastomere in der Komponente 2), peroxidisch vernetzbar sein müssen und
   b) zwei oder mehrere peroxidische Vernetzer, wobei mindestens ein peroxidischer Vernetzer mit einer Zerfallstemperatur T_{1/2} (1h) im Bereich von 70 bis 130°C und mindestens ein peroxidischer Vernetzer mit einer Zerfallstemperatur T_{1/2} (1h) im Bereich von 120 bis 160°C verwendet wird, wobei mindestens zwei Vernetzer enthalten sind, die einen Unterschied in der Zerfallstemperatur T_{1/2} (1h) von mindestens 5°C aufweisen.

In einer besonders bevorzugten Ausführungsform umfasst das Mehrkomponenten-System
1) eine Thermoplast-Komponente wie in Anspruch 1 definiert, enthaltend ein oder mehrere Polyamide, die einer Erweichungstemperatur von gleich oder größer 180°C besitzen und
2) eine Kautschuk-Komponente enthaltend
   a) einen oder mehrere peroxidisch vernetzbare hydrierte Nitrilkautschuke und
   b) zwei oder mehrere peroxidische Vernetzer, wobei mindestens ein peroxidischer Vernetzer mit einer Zerfallstemperatur T_{1/2} (1h) im Bereich von 70 bis 130°C und mindestens ein peroxidischer Vernetzer mit einer Zerfallstemperatur T_{1/2} (1h) im Bereich von 120 bis 160°C verwendet wird, wobei mindestens zwei Vernetzer enthalten sind, die einen Unterschied in der Zerfallstemperatur T_{1/2} (1h) von mindestens 5°C aufweisen.

In einer alternativ ebenfalls bevorzugten Ausführungsform handelt es sich um ein Mehrkomponenenten-System umfassend
1) eine Thermoplast-Komponente wie in Anspruch 1 definiert und
2) eine Kautschuk-Komponente, die kein doppelbindungshaltiges Silan und kein di- oder polyfunktionelles Maleinimid enthält und
   a) ein oder mehrere Elastomere,
      wobei diejenigen Elastomere, die mit 30 Gew.% oder mehr in der Kautschuk-Komponente 2) enthalten sind, bezogen auf 100 Gew.% als Summe aller Elastomeren der Kautschuk-Komponente, peroxidisch vulkanisierbar sein müssen und
   b) zwei oder mehrere peroxidische Vernetzer, wobei mindestens ein peroxidischer Vernetzer mit einer Zerfallstemperatur T_{1/2} (1h) im Bereich von 70 bis 130°C, bevorzugt im Bereich von 100 bis 125°C, und mindestens ein zweiter peroxidischer Vernetzer mit einer Zerfallstemperatur T_{1/2} (1h) im Bereich von 120 bis 160 °C, bevorzugt im Bereich von 130 bis 150°C., verwendet wird, wobei mindestens zwei peroxidische Vernetzer enthalten sind, die einen Unterschied in der Zerfallstemperatur T_{1/2} (1h) von mindestens 5°C aufweisen.

**Gegenstand der Erfindung** ist ferner die Verwendung des erfindungsgemäßen Mehrkomponenten-Systems zur Herstellung eines Kautschuk-Thermpolast-Verbund-Formteils.

Aus den Bestandteilen der Kautschuk-Komponente 2) wird eine Formmasse hergestellt. Die Mischung der wesentlichen Bestandteile (a), (b), und gegebenenfalls weiterer Bestandteile kann dabei je nach Temperatur unter Verwendung der typischen in der Kautschukindustrie gängigen Mischapparaturen erfolgen. Einsetzbar sind sowohl diskontinuierlich mischende Aggregate in Form von Mischwalzen oder Innenmischern als auch kontinuierlich mischende Aggregate wie Mischextruder. Es hat sich bewährt darauf zu achten, dass die Mischung der Bestandteile (a) und (b) der Kautschuk-Komponente 2) bei einer Temperatur erfolgt, bei der keine vorzeitige Vernetzung stattfindet.

Die Herstellung des Kautschuk-Thermoplast-Verbundgegenstands erfolgt üblicherweise unter Einsatz einer Vorrichtung, die vom prinzipiellen Aufbau die Herstellung in einem einzigen Zyklus ermöglicht. Hierfür verfügen die Vorrichtungen typischerweise über eine Wendeplattenmaschine, einen Drehteller oder einen Schieber. Möglich ist aber auch die Herstellung des Kunststoff-Kautschuk Verbundgegenstands in einem zweistufigen Verfahren.

Bei Einsatz einer Maschine, die über eine Wendeplatte, einen Drehteller oder einen Schieber verfügt, wird üblicherweise in einem ersten Takt ein Vorspritzling aus der thermoplastischen Komponente 1) in einer Kavität des Werkzeuges hergestellt. Nach einer Drehbewegung des Werkzeuges, oder mittels Umsetztechnik, wird der Vorspritzling in eine geometrisch veränderte Fertigspritzstation gebracht (beispielsweise mittels der Drehtechnik durch eine Drehung um 180° bzw. oder auch 120° bei Dreikavitätenwerkzeugen) und in einem zweiten Takt wird die Kautschuk-Komponente 2) eingespritzt. Nach Erreichen der Entformungsstabilität der Kautschuk-Komponente kann entformt werden. Die Schmelzetemperaturen der thermoplastischen Komponente 1) liegen tendenziell im Bereich von 180 bis 340 °C, bevorzugt im Bereich von 200 bis 300 °C Die spezifischen Spritzdrücke der Thermoplast-Komponente 1) liegen üblicherweise im Bereich von 200 bis 2500 bar, bevorzugt im Bereich von 500 bis 1500 bar, bei Werkzeugtemperaturen der thermoplastischen Temperierbereiche im Bereich von 20 bis 200 °C, bevorzugt im Bereich von 80 bis 180°C. Die Materialaufbereitung und Zufuhr der Kautschuk-Komponente 2) erfolgt bei Massetemperaturen üblicherweise im Bereich von 50 bis 160 °C. Die Elastomerkomponente wird mit spezifischen Einspritzdrücken im Bereich von 100 bis 3000 bar, bevorzugt im Bereich von 250 bis 2000 bar eingespritzt. Die Vulkanisationstemperaturen der Elastomerbereiche, die zur Entformbarkeit führen, liegen üblicherweise im Bereich von 120 bis 200 °C, bevorzugt im Bereich von 140 bis 190°C. Eine Temperung erfolgt tendenziell bei einer Temperatur im Bereich von 120 bis 200°C, bevorzugt bei einer Temperatur größer oder gleich 140°C.

Diese Werte sind im Wesentlichen stark abhängig von der Bauteilgeometrie (z.B. der Dicke sowie der Fließweglänge), der Art und Lage der Angussgestaltung (z.B. Heiss- oder Kaltkanal) sowie von den spezifischen Materialkennwerten. Die Nachdruckphase liegt tendenziell in Bereichen von 0 bis 3000 bar bei Nachdruckzeiten von 0 Sekunden bis zum Öffnen des Werkzeuges.

Die erhaltenen Kautschuk-Thermoplast-Verbundgegenstände zeichnen sich durch eine erhöhte Resistenz gegenüber Ölen, Fetten, Lösungsmitteln und Kraftstoffen, wie Diesel oder Benzin, aus und dies insbesondere bei höheren Temperaturen.

Gegenstand der Erfindung ist somit die Verwendung des erfindungsgemäßen Mehrkomponenten-Systems zur Herstellung von Kautschuk-Thermoplast-Verbundgegenständen, bevorzugt von abdichtenden Funktionselementen, Bauteilen oder Bauteilgruppen des Kühl- oder Ölkreislaufs von Automobilen oder allgemein Bauteilen oder Bauteilgruppen, die eine Hart-Weich-Charakteristik aufweisen, in Kontakt zu verschiedenen Medien stehen und dabei höheren Temperatur ausgesetzt sind.

Beispielsweise lässt sich das erfindungsgemäße Mehrkomponenten-System einsetzen zur Herstellung von Zylinderdeckeln mit umlaufender Dichtung, Ölwannen mit umlaufender Dichtung, Zahnriemenabdeckungen mit umlaufender Dichtung, Kettenabdeckungen mit umlaufender Dichtung, Motorgehäusen mit Dichtungen, Thermostatgehäusen mit umlaufender Dichtung, Wasserkästen mit Dichtungen, Kühlern mit Dichtungen, Öl-Modulen mit Dichtungen, Luftansaugstutzen mit Abdichtungen, Gehäusedeckeln mit Dichtungen, Ventildeckeln mit Dichtungen, gummibeschichteten Walzen, Flanschen, Rohr- und Schlauchkupplungen, Dichtungsrahmen, Dichtungen, Laufrollen oder von Strukturbauteilen mit Dämpfelementen.

Durch den Einsatz des erfindungsgemäßen Mehrkomponenten-Systems wird bei der Herstellung der Verbundgegenstände eine unerwünschte Haftung an den verwendeten Werkzeugoberflächen verhindert, wie sie üblicherweise zu beobachten ist, wenn Kautschuk-Komponenten verwendet werden, die eine höhere Konzentration von reaktiven Gruppen aufweisen.

Darüberhinaus ermöglicht das neue Mehrkomponenten-System erstmals die Herstellung der Kautschuk-Thermoplast-Verbundgegenstände in einem einzigen Verfahrensschritt mit Zykluszeiten, die der Zykluszeit, umfassend die Injektions- und Abkühlungs/Aushärtezeiten, bei der Herstellung von reinen Thermoplastformteilen vergleichbar sind. Das Verfahren ist somit nicht mehr durch die sonst längeren Zykluszeiten für die Vulkanisation der Kautschuk-Komponente beschränkt.

Die Kautschuk-Komponente des erfindungsgemäßen Mehrkomponenten-Systems ermöglicht schnelle Werkzeugfüllzeiten bedingt durch ein exzellentes Fließverhalten und eine schnelle Vulkanisation bis zu einem entformungsstabilen Punkt.

Das Verfahren ermöglicht es daher, dass die Kautschuk-Komponente nur bis zur Dimensionsbeständigkeit bzw. Entformbarkeit in der Form ausvulkanisiert wird und die notwendige Endvulkanisation in einem nachgeschalteten kontinuierlichen oder batch-Temperungsverfahren erfolgt. Die Temperung kann dabei sowohl durch thermische wie induktive wie Strahlungsverfahren (beispielsweise IR oder Mikrowellen) erfolgen. Dies führt zu einer substanziellen Reduzierung der Zyklus-Zeit.

Überraschender Weise wurde gefunden, dass die nach der drucklosen Temperung erreichten Produkteigenschaften denen von in der Form unter Druck erreichten Eigenschaften völlig vergleichbar sind. Dies ist ungewöhnlich, da der Fachmann normalerweise davon ausgeht, dass peroxidische Mischungen nicht offen vulkanisiert werden können, weil Sauerstoff die Vulkanisatiönsreaktion an der Oberfläche der Bauteile stark beeinträchtigt und im druckfreien Zustand häufig eine extreme Blasenbildung durch die Zersetzungsprodukte der Peroxide beobachtet wird, die der Bauteilfunktion und auch den Eigenschaften abträglich sind.

Durch den Einsatz der speziellen Kombination von mindestens zwei Peroxiden mit der angegebenen unterschiedlicher Zerfallskinetik und die Nachschaltung eines geeigneten Temperzyklus nach Entformung aus dem Werkzeug (ein oder mehrstufig oder mit kontinuierlich steigenden Temperaturen) können überraschender Weise für die Vulkanisation der Kautschuk-Komponente Zykluszeiten erreicht werden, die denen für die Verarbeitung der Thermoplast-Komponente vergleichbar sind.

Durch die Verwendung des erfindungsgemäßen Mehrkomponentensystems ist es ferner für eine Bauteilhaftung nicht mehr zwingend erforderlich, zusätzliche Haftvermittler einzusetzen, weder für die Thermoplast- noch für die Kautschuk-Verarbeitung.

Das Verfahren zeichnet sich weiter dadurch aus, dass die Verfahrensbedingungen und Bauteilformen mittels spezieller rheologischer und mechanischer FEM-Simulationen untersucht werden können und Aufschlüsse über die Fertigungsprozesse, wie das Füllverhalten, aber auch über das spätere Bauteilverhalten im Lastfall gewonnen werden können. Es können somit besonders leistungsfähige Systeme entwickelt werden, bei gleichzeitiger Reduzierung der seriell gängigen Anlaufproblematiken, unter Einsatz zahlreicher Werkzeuge und Materialmodifikationen und die benötigten Maschinen- und Aggregatgrößen geeignet bestimmt werden. Diese Kombination von Verfahrensvorteilen und Produkteigenschaften ist bis jetzt in dieser Form nicht erreichbar gewesen.

### Beispiele:

### Beispiele 1-37:

### Herstellung und Untersuchung von Elastomer-Compounds (Kautschuk-Komponente 2)

In den Beispielen wurden die folgenden Substanzen eingesetzt:

| | |
|---|---|
| **Armen^{®} 18D Prills** | Zinksalz von 4- und 5-Methyl-2-Mercaptobenzimidazol mit einer Dichte von 1,25 g/cm³ bei 25°C; Lanxess Deutschland GmbH |
| **Buna^{®} EPG 5450** | Ethylen-Propylen-ENB-Terpolymer (EPDM) mit einem Ethylen-Gehalt von 52% und einer Mooneyviskosität (ML 1+4 @ 125°C) von 46; Lanxess Deutschland GmbH |
| **Buna^{®} EPT 2450** | Ethylen-Propylen-ENB-Terpolymer (EPDM) mit einem Ethylen-Gehalt von 59% und einer Mooneyviskosität (ML 1+8 @ 100°C) von 35; Lanxess Deutschland GmbH |
| **Corax^{®} N 550** | Ruß; Fast Extruding Furnace (FEF) der Degussa AG |
| **DIAK^{®} No 7** | Triallylisocyanurat der Firma DuPont |
| **Diplast^{®} TM 8-10ST** | Stab. Trimellitate von C₈-C4₁₉ linearen Alkoholen mit einer Dichte von 0,97 g/ cm³ , Lonza |
| **Edenor^{®} C 18 98-100 Levapren^{®} 700 HV** | Stearinsäure der Cognis Deutschland GmbH&Co. KG Vinylacetat-Ethylen Copolymer (EVM) mit einem Vinylacetat-Gehalt von 70 Gew.% und einer Mooneyviskosität (ML1+4 @ 100°C) von 27; Lanxess Deutschland GmbH |
| **Levapren^{®} 600** | Vinylacetat-Ethylen Copolymer (EVM) mit einem Vinylacetat-Gehalt von 60 Gew.% und einer Mooneyviskosität (ML 1+4 @ 100°C) von 27; Lanxess Deutschland GmbH |
| **Maglite^{®} DE PERKADOX^{®} 14-40 B-PD** | Magnesiumoxid von CP Hall Co 1,3-bis-(t-Butylperoxy isopropyl)-benzol der Akzo Nobel Chemicals |
| **Rhenofit^{®} DDA-70** | 70 Gew.-% Diphenylamin-Derivat (dry liquid) der Rhein Chemie Rheinau GmbH |
| **Rhenofit^{®} OCD** | octyliertes Diphenylamin der Rhein Chemie Rheinau GmbH. |
| **Rhenogran^{®} PCD50** | Rhenogran® PCD-50, Polycarbodiimid der Rhein Chemie Rheinau GmbH |
| **Therban^{®} AT 3404 VP** | vollhydriertes Acrylnitril-Butadien Copolymer (HNBR) mit einem Acrylnitril-Gehalt von 34 Gew.% und einer Mooneyviskosität (ML 1+4 @ 100°C) von 39; Lanxess Deutschland GmbH |
| **Therban^{®} A 3407** | vollhydriertes Acrylnitril-Butadien Copolymer (HNBR) mit einem Acrylnitril-Gehalt von 34 Gew.% und einer Mooneyviskosität (ML 1+4 @ 100°C) von 70; Lanxess Deutschland GmbH |
| **Therban^{®} AT 3904 VP** | vollhydriertes Acrylnitril-Butadien Copolymer (HNBR) mit einem Acrylnitril-Gehalt 39 Gew.% und einer Mooneyviskosität (ML 1+4 @ 100°C) von 39; Lanxess Deutschland GmbH |
| **Therban^{®} A 3907** | vollhydriertes Acrylnitril-Butadien Copolymer (HNBR) mit einem Acrylnitril-Gehalt von 34 Gew.% und einer Mooneyviskosität (ML 1+4 @ 100°C) von 70; Lanxess Deutschland GmbH, |
| **Therban^{®} VP KA 8889** | hydriertes Acrylnitril-Butadien-Methacrylsäure-Terpolymer (HNBR) mit einem Acrylnitril-Gehalt von 32 Gew.% und einer Mooney-Viskosität (ML 1+4 @ 100°C) von 74; Lanxess Deutschland GmbH |
| **Thermax® N 990 TRIGONOX® 29-40 B-PD** | Russ der Firma Lehmann & Voss 1,1-Bis-(t-butylperoxy)-3,3,5-trimethylcylohexan der Akzo Nobel Chemicals |
| **Vamac^{®} D** | Vamac® Ethylen-Acrylat-Copolymer (EAM) mit einer Mooneyviskosität (ML 1+4 @ 100°C) von 22; DuPont de Nemours Int. |
| **Vulkanox^{®} ZMB2** | Zinksalz von 4- und 5-Methyl-2-Mercaptobenzimidazol mit einer Dichte von 1,25 g/cm³ bei 25°C; Lanxess Deutschland GmbH |
| **Vulkasil ^{®}A1** | basisches NaAluminiumsilikat der Lanxess Deutschland GmbH |
| **Zinkoxid aktiv^{®}** | Zinkoxid der Lanxess Deutschland GmbH |

Bei den nachfolgenden Beispielen 1-33 handelt es sich um Beispiele, in denen Untersuchungen an den Kautschuk-Komponenten des Mehrkomponentensystems durchgeführt wurden. Diese Untersuchungen und deren Ergebnisse zeigen, dass die Auswahl zweier spezieller peroxidischer Vernetzer mit dem angegebenen Unterschied in den Zerfallstemperaturen entscheidend für die Vernetzbarkeit der Kautschuk-Komponente ist und damit auch für die Eigenschaften auch des Verbundformteils sind.

Die in den nachfolgenden **Tabellen 2, 7, 11, 14 und 18** aufgeführten Mischungen wurden unter Einsatz eines Innenmischers GK 1,5 E der Firma Krupp Elastomertechnik, Hamburg hergestellt. Die Mischparameter sind zusammenfassend in **Tabelle 1a und b** dargestellt.

In einem ersten Schritt wurden die Bestandteile der Kautschuk-Komponente, Stabilisatoren und Vernetzungsaktivatoren vorgelegt und 1 min gemischt. Im Anschluss wurden die Füllstoffe hinzugegeben und die Mischung für weitere 4,5 min gemischt. Die Mischungstemperatur überstieg zu keinem Zeitpunkt 150°C. Im Bedarfsfall wurde zwecks Verhinderung einer höheren Temperatur die Drehzahl erniedrigt. Nach Beendigung der vorgegebenen Mischzeit wurden der Mischer entleert.

Die Peroxide wurden im Anschluss in einem zweiten Schritt auf einer Mischwalze der Firma Krupp Elastomertechnik mit 200 mm Durchmesser und 350 mm Breite bei einer Kühlwassertemperatur von 40°C zugemischt. Die Mischzeit betrug etwa 10 min.

Zur Durchführung des Zugversuchs, der Härtemessung sowie zur Prüfung des Druckverformungsrestes wurden entsprechende Probenkörper aus den Elastomer-Compounds hergestellt und in einer Plattenpresse bei 170°C für 20 min vulkanisiert, wenn nicht anders angezeigt.

**Tabelle 1a: Misch-Parameter für den ersten Schritt**

| **Misch-Parameter** | | |
|---|---|---|
| Drehzahl | 1/min | 40 |
| Friktion | | 1 |
| Schaufeltemperatur | °C | 50 |
| Trog/Sattel-Temp. | °C | 50 |
| Stempeldruck zur Verschließung der Mischkammer | bar | 6 |
| Füllgrad, bezogen auf das Kammervolumen | % | 70 |
| Mischzeit | min | 5,5 |

**Tabelle 1b: Misch-Parameter für den zweiten Schritt**

| **Zugabe der Peroxide auf der Walze:** | | |
|---|---|---|
| Walzengröße (Durchmesser) | mm | 200 |
| Drehzahl | 1/min | 20 |
| Friktion | | 1,22 |
| Temp. vordere Walze | °C | 40 |
| Temp. hintere Walze | °C | 40 |
| Mischzeit | min | 10 |

### Beispiele 1-8:

Die mit einem "*" gekennzeichneten Kautschuk-Mischungen 1*, 4* und 5* besitzen Zusammensetzungen, die bei Kombination - mit einer Thermoplast-Komponente zu Vergleichsbeispielen im Sinne dieser Erfindung führen würden, die Mischungen 2, 3, 6, 7 und 8 besitzen dagegen Zusammensetzungen, die bei Kombination mit einer Thermoplast-Komponente zu erfindungsgemäßen Beispielen im Sinne dieser Erfindung führen würden.

**Tabelle 2: Zusammensetzung der Elastomer-Mischungen 1-8**

| **Beispielsmischung** | **1*** | **2** | **3** | **4*** | **5*** | **6** | **7** | **8** |
|---|---|---|---|---|---|---|---|---|
| Therban^{®} VP KA9866 | 100 | 100 | 100 | 100 | 100 | 100 | 80 | 80 |
| Corax^{®} N 550 | 30 | 30 | 30 | 30 | 30 | 30 | 30 | 30 |
| Vulkasil^{®} A1 | 10 | 10 | 10 | 10 | 10 | 10 | 10 | 10 |
| Rhenofit^{®} DDA-70 | 1,5 | 1,5 | 1,5 | 1,5 | 1,5 | 1,5 | 1,5 | 1,5 |
| Vulkanox^{®} ZMB_{2/C5} | 0,5 | 0,5 | 0,5 | 0,5 | 0,5 | 0,5 | 0,5 | 0,5 |
| Zinkoxyd aktiv | 2 | 2 | 2 | 2 | 2 | 2 | - | - |
| Diplast^{®} TM 8-10/ST | 10 | 10 | - | - | - | 10 | | - |
| DIAK^{®} No. 7 | 1,5 | 1,5 | 3 | 3 | 3 | 3 | 1,5 | 1,5 |
| TRIGONOX^{®} 29-40 B-PD | 12 | 8 | 8 | 12 | 16 | 8 | 8 | 8 |
| PERKADOX^{®} 14-40 B-PD - | | 8 | 8 | - | - | 8 | 8 | 8 |
| Thermax^{®} N 990 | - | - | 30 | 30 | 30 | 30 | - | 30 |
| Therban^{®} VP KA 8889 | - | - | - | - | - | - | 20 | 20 |
| **Gesamt phr** | 167,5 | 171,5 | 193 | 189 | 193 | 203 | 159,5 | 189,5 |
| Dichte g/ml | 1,141 | 1,149 | 1,23 | 1,224 | 1,227 | 1,214 | 1,151 | 1,221 |

An den Mischungen 1-8 wurden die in **Tabelle 3** angegebenen Eigenschaften bestimmt.

Die Messung der Mooney-Viskosität erfolgte gemäß DIN D 1646 bei 100°C.

**Tabelle 3: Bestimmung der Mooney Viskositäten der Mischungen 1-8 an Probekörpern gemäß DIN D 1646**

| **Beispiel** | **1*** | **2** | **3** | **4*** | **5*** | **6** | **7** | **8** |
|---|---|---|---|---|---|---|---|---|
| ML 1+4@100°C ME | 47 | 46 | 75 | 79 | 77 | 54 | 73 | 88 |

Anschließend wurde unter Einsatz eines Monsanto-Rheometers MDR 2000 das Vulkanisationsverhalten der Mischungen 1-8 bei einer Prüftemperatur von 170°C und einer Prüfzeit von 30 Minuten untersucht (**Tabelle 4**).

**Tabelle 4: Bestimmung des Vulkanisationsverhaltens**

| **Prüf-Größe //** | **Beispiel** | **1*** | **2** | **3** | **4*** | **5*** | **6** | **7** | **8** |
|---|---|---|---|---|---|---|---|---|---|
| Drehmomentminium | dNm | 0,88 | 0,80 | 1,52 | 1,67 | 1,69 | 1,04 | 1,47 | 1,93 |
| Drehmomentmaximum | dNm | 8,27 | 18,12 | 31,37 | 14,17 | 19,67 | 23,55 | 23,16 | 27,85 |
| Drehmomentendwert | dNm | 7,83 | 18,03 | 31,28 | 13,50 | 18,73 | 23,50 | 23,03 | 27,69 |
| Anstiegszeit TS1 | min | 0,37 | 0,40 | 0,34 | 0,31 | 0,28 | 0,37 | 0,38 | 0,35 |
| Anstiegszeit TS2 | min | 0,43 | 0,49 | 0,40 | 0,35 | 0,32 | 0,44 | 0,44 | 0,40 |
| Umsatzzeit (95% Vulkanisation) | min | 1,16 | 7,76 | 8,30 | 1,15 | 1,05 | 8,50 | 7,13 | 7,24 |
| Grenzfestigkeit von 7 dNm rrreicht nach | min | 0,94 | 1,03 | 0,59 | 0,48 | 0,40 | 0,80 | 0,67 | 0,53 |
| Max.Vemetz.geschw. | dNm/min | 17,20 | 12,90 | 21,60 | 29,30 | 47,00 | 15,20 | 18,80 | 21,80 |
| Tan δ vom Endwert | | 0,16 | 0,03 | 0,05 | 0,16 | 0,10 | 0,05 | 0,05 | 0,06 |
| Zeitdifferenz zwischen und 10% Umsatz | 90% Umsatz min | 0,62 | 5,39 | 5,82 | 0,63 | 0,56 | 5,95 | 4,87 | 5,02 |

Ein direkter Vergleich der Mischung 3 mit der Mischung 5* zeigt, dass Mischung 5* bei vergleichbarer Mooney-Viskosität und Einsatz gleicher Gewichtsmengen Peroxid eine deutlich geringere Vernetzungsdichte erreicht, was aus dem Drehmomentmaximum abzulesen ist, während die TS2 Zeit (dies ist der Wert, der die Zeit angibt, bei der Produkte bei der entsprechenden Temperatur noch verarbeitet werden können) sich nur wenig unterscheidet. Gleiches gilt für die Zeit, die zur Erreichung der Grenzfestigkeit für die Entformung benötigt wird (welche willkürlich experimentell festgelegt wird). Es kann durch den Einsatz von zwei unabhängigen Radikalstartern also eine niedrige Zykluszeit bei gleichzeitig zufriedenstellenden Produkteigenschaften (siehe Druckverformungsreste) erreicht werden, wie sie durch Einsatz eines einzelnen schnell zerfallenden Peroxids (Beispiel 5*) nicht möglich sind. Gleichzeitig hat der Einsatz eines einzelnen schnell zerfallenden Peroxids den Nachteil, dass bei der notwendigen hohen Peroxid-Dosierung Blasenbildung in den Vulkanisaten auftritt. Dieser Nachteil kann beim erfindungsgemäßen Einsatz der unterschiedlichen Peroxide mit versetzten Zerfallszeiten weitgehend vermieden werden kann. Hierbei hat es sich ferner bewährt, geeignete Heiz- und Temperungszyklen zu wählen.

**Tabellen 5**: Messung der Zugfestigkeit am S2 Stab bei RT
a) ungealtert und
b) nach Lagerung bei 150°C für 7 Tage gemäß DIN 53504

**Tabelle 5a)**

| **Beispiel** | | **1*** | **2** | **3** | **4*** | **5*** | **6** | **7** | **8** |
|---|---|---|---|---|---|---|---|---|---|
| F | MPa | 18,4 | 17,2 | 18 | 17,5 | 18,8 | 16,6 | 20,0 | 20,9 |
| D | % | 614 | 299 | 158 | 370 | 284 | 195 | 259 | 219 |
| S25 | MPa | 0,7 | 0,9 | 1,7 | 1,2 | 1,3 | 1,2 | 1,2 | 1,6 |
| S50 | MPa | 1,0 | 1,4 | 3,5 | 1,7 | 2,1 | 2,3 | 2,0 | 3,1 |
| S75 | MPa | 1,2 | 2,2 | 6,2 | 2,3 | 3,1 | 3,9 | 3,1 | 5,2 |
| S100 | MPa | 1,4 | 3,1 | 9,5 | 3,2 | 4,5 | 6,2 | 4,7 | 7,8 |
| S150 | MPa | 2,3 | 6,0 | 16,9 | 5,6 | 8,1 | 11,7 | 9,0 | 13,7 |
| S200 | MPa | 3,5 | 9,5 | | 8,5 | 12,2 | 17,4 | 13,9 | 19,3 |
| S250 | MPa | 5,0 | 13,5 | | 11,4 | 16,4 | | 19,1 | |
| S300 | MPa | 6,6 | 17,6 | | 14,3 | 19,5 | | | |
| S350 | MPa | 8,4 | | | 16,8 | | | | |
| Härte gemäß DIN 53505 Shore A | | 55 | 62 | 75 | 67 | 70 | 69 | 67 | 74 |
| Weiterreisswiderstand gem. DIN 53515 N/mm | | 28,2 | 14,0 | 9,8 | 19,6 | 15,3 | 10,6 | 10,5 | 12,3 |

**Tabelle 5b)**

| **Beispiel** | | **1*** | **2** | **3** | **4*** | **5*** | **6** | **7** | **8** |
|---|---|---|---|---|---|---|---|---|---|
| F | MPa | 17,7 | 16,6 | 19,4 | 17,6 | 19,5 | 18,4 | 20,3 | 21,1 |
| D | % | 537 | 264 | 143 | 296 | 244 | 189 | 189 | 155 |
| S25 | MPa | 1,0 | 1,2 | 2,5 | 1,9 | 2,3 | 1,8 | 1,7 | 2,6 |
| S50 | MPa | 1,5 | 2,2 | 5,8 | 3,2 | 4,1 | 3,7 | 3,4 | 6 |
| S75 | MPa | 2,1 | 3,6 | 9,9 | 4,9 | 6,5 | 6,3 | 6,1 | 10 |
| S100 | MPa | 2,8 | 5,3 | 13,8 | 6,9 | 8,9 | 9,2 | 9,2 | 13,9 |
| S150 | MPa | 4,6 | 8,9 | | 10,7 | 13,5 | 14,8 | 15,6 | 20,6 |
| S200 | MPa | 6,5 | 12,4 | | 13,7 | 17,1 | | | |
| S250 | MPa | 8,3 | 15,7 | | 16,0 | 19,8 | | | |
| S300 | MPa | 10,1 | | | 17,6 | | | | |
| S350 | MPa | 11,6 | | | | | | | |

Am Beispiel der Mischung 3 und der Mischung 5* können für die Zugversuchsergebnisse vergleichbare Festigkeiten festgestellt werden. Bei gleicher Dosierung in Gewichtsteilen Peroxid wird für die Mischung 3 aber ein höherer Modul 50% Dehnung und eine höhere Härte gefunden, was auf eine effizientere Vernetzung schließen lässt. Eine Studie der Alterungseigenschaften weist darüber hinaus auf eine bessere Alterungsbeständigkeit der Mischung 3 im Vergleich zu der Mischung 5* hin. In allen Werten Bruchspannung, Bruchdehnung, und Modul 50 werden für die Mischung 3 geringere Abweichungen von den Ausgangswerten gefunden als in der Mischung 5*.

**Tabelle 6: Messung des Druckverformungsrestes (compression set auch als "C.S." abekürzt) nach DIN 53517 A an einer Klappe als Prüfkörper a) nach 72 Stunden und b) nach 168 h**

| **Beispiel** | | | **1*** | **2** | **3** | **4*** | **5*** | **6** | **7** | **8** |
|---|---|---|---|---|---|---|---|---|---|---|
| **Prüf-Parameter** | | | | | | | | | | |
| Temperatur | 150°C | | | | | | | | | |
| Zeit | 72 h | | | | | | | | | |
| Verformung | 25% | | | | | | | | | |
| C.S. (compression set) | | % | 67,6 | 32,7 | 28,9 | 58,5 | 48,1 | 29,3 | 35,8 | 35,4 |
| | | | | | | | | | | |

| **Beispiel** | | | **1*** | **2** | **3** | **4*** | **5*** | **6** | **7** | **8** |
|---|---|---|---|---|---|---|---|---|---|---|
| **Prüf-Parameter** | | | | | | | | | | |
| Temperatur | 150°C | | | | | | | | | |
| Zeit | **168 h** | | | | | | | | | |
| Verformung | 25% | | | | | | | | | |
| C.S. (compression set) | | % | 73,2 | 43,7 | 138,9 | 66,2 | 54,5 | 35,2 | 43,2 | 143,4 |

Ein Vergleich der Druckverformungsreste zeigt für die Mischung 3 im Vergleich zu Mischung 5* eine deutliche Erniedrigung (d.h. Verbesserung) der gemessenen Druckverformungsreste. Druckverformungsreste < 50% sind für den dauerhaften Einsatz als Dichtungswerkstoffe gewünscht.

### Beispiele 9-19:

Gemäß der angegebenen Vorgehensweise wurden die Mischungen 9-19 mit den in Tabelle 7 angegebenen Zusammensetzungen hergestellt.

Die in Tabelle 7 mit * gekennzeichneten Mischungen stellen Beispiele dar, die bei Kombination mit einer Thermoplast-Komponente zu Vergleichsbeispielen im Sinne dieser Anmeldung führen würden und die ungekennzeichneten Mischungen besitzen Zusammensetzungen, die bei entsprechender Kombination mit einer Thermoplast-Komponente zu erfindungsgemäßen Beispielen im Sinne dieser Anmeldung führen würden.

**Tabelle 7: Zusammensetzung der Mischungen 9-19**

| Beispiel | 9* | 10* | 11* | 12* | 13* | 14 | 15 | 16 | 17 | 18 | 19 |
|---|---|---|---|---|---|---|---|---|---|---|---|
| Therban^{®} A 3407 | 100 | | | | | 100 | | | | | |
| Therban^{®} VPKA 8966 | | 100 | | | 100 | | 100 | | | 100 | 100 |
| Therban^{®} A 3907 | | | 100 | | | | | 100 | | | |
| Therban^{®} A 3904 | | | | 100 | | | | | 100 | | |
| Corax^{®} N 550 | 30 | 30 | 30 | 30 | 30 | 30 | 30 | 30 | 30 | 30 | 30 |
| Thermax^{®} N 990 | 30 | 30 | 30 | 30 | 30 | 30 | 30 | 30 | 30 | 30 | 30 |
| Vulkasil^{®} Al | 10 | 10 | 10 | 10 | 10 | 10 | 10 | 10 | 10 | 10 | 10 |
| Rhenofit^{®} DDA-70 | 1,5 | 1,5 | 1,5 | 1,5 | 1,5 | 1,5 | 1,5 | 1,5 | 1,5 | 1,5 | 1,5 |
| Vulkanox^{®} ZMB2/C5 | 0,5 | 0,5 | 0,5 | 0,5 | 0,5 | 0,5 | 0,5 | 0,5 | 0,5 | 0,5 | 0,5 |
| Zinkoxyd aktiv | 2 | 2 | 2 | 2 | 2 | 2 | 2 | 2 | 2 | 2 | 2 |
| Maglite^{®} DE | 2 | 2 | 2 | 2 | 2. | 2 | 2 | 2 | 2 | 2 | 2 |
| DIAK^{®} No.7 | 3 | 3 | 3 | 3 | 3 | 3 | 3 | 3 | 3 | 3 | 3 |
| PERKADOX^{®} 14-40 B-PD | 10 | 10 | 10 | 10 | | 8 | 8 | 8 | 8 | 5 | 8 |
| Trigonox^{®} 29. | | | | | 10 | 8 | 8 | 8 | 8 | 5 | 4 |
| Gesamt | 189,0 | 189,0 | 189,0 | 189,0 | 189,0 | 195,0 | 195,0 | 195,0 | 195,0 | 189,0 | 191,0 |

An den Elastomer-Mischungen 9-19 wurden die in der Tabelle 8a angegebenen Mooney-Viskosität (ML 1+4 @ 100°C) gemäß DIN D 1646 bestimmt.

**Tabelle 8A: Mooney-Viskositäten der Elastomer-Mischungen 9-19**

| **Beispiel** | **9*** | **10*** | **11*** | **12*** | **13*** | **14** | **15** | **16** | **17** | **18** | **19** |
|---|---|---|---|---|---|---|---|---|---|---|---|
| ML 1+4 @ 100°C | 121 | 78 | 121 | 80 | 82 | 112 | 75 | 114 | 75 | 81 | 81 |

Anschließend wurde unter Einsatz eines Monsanto-Rheometers MDR 2000 das Vulkanisationsverhalten der Elastomer-Mischungen 9-19 bei einer Prüftemperatur von 160°C (**Tabelle 8B**) bzw. 170°C (**Tabelle 8 C)** untersucht.

**Tabelle 8B: Prüfung der Mischung an der Monsanto MDR 2000 bei einer Prüftemperatur von 160°C, Prüfzeit: 30 min**

| **Beispiel** | **9*** | **10*** | **11*** | **12*** | **13*** | **14** | **15** | **16** | **17** | **18** | **19** |
|---|---|---|---|---|---|---|---|---|---|---|---|
| Drehmoment-Minimum / dNm | 2,79 | 1,37 | 2,06 | 0,98 | 1,68 | 2,89 | 1,48 | 2,35 | 1,13 | 1,61 | 1,58 |
| Drehmoment-Maximum / dNm | 42,28 | 36,99 | 40,82 | 37,59 | 11,32 | 45,35 | 44,03 | 45,79 | 41,07 | 28,05 | 37,27 |
| Anstiegszeit TS2 / min | 1,68 | 2,59 | 1,80 | 2,64 | 0,56 | 0,51 | 0,58 | 0,53 | 0,66 | 0,87 | 0,97 |
| Umsatzzeit 50% / min | | 11,7913,4812,3113.3 | | | 0,94 | 6,40 | 7,17 | 6,80 | 7,95 | 9,67 | 10,31 |

**Tabelle 8C: Prüfung der Mischung an der Monsanto MDR 2000 bei einer Prüftemperatur - von 170°C, Prüfzeit: 30 min**

| **Beispiel** | **9*** | **10*** | **11*** | **12*** | **13*** | **14** | **15** | **16** | **17** | **18** | **19** |
|---|---|---|---|---|---|---|---|---|---|---|---|
| Drehmoment-Minimum / dNm | 2,60 | 1,26 | 1,98 | 0,90 | 1,64 | 2,79 | 1,45 | 2,27 | 1,10 | 1,54 | 1,51 |
| Drehmoment-Maximum / dNm | 42,80 | 37,70 | 41,70 | 38.20 | 10,7 | 45,00 | 44,10 | 45,5 | 41,01 | 27,90 | 37,50 |
| Anstiegszeit TS2 / min | 0,81 | 1,13 | 0,86 | 1,15 | 0,37 | 0,35 | 0,39 | 0,35 | 0,42 | 0,51 | 0,54 |
| Umsatzzeit 50%/min | 4,62 | 5,25 | 4,66 | 5,18 | 0,51 | 2,64 | 2,97 | 2,72 | 3,21 | 3,91 | 4,11 |

**Tabelle 9: Prüfungen an den Vulkanisaten aus den Mischungen 9-19**

**Tabelle 9A: Zugversuch: Prüfung am Stab S2 bei RT gemäß DIN 53504, Messung der Härte Shore A bei RT gemäß DIN 53505**

| **Beispiel** | | **9*** | **10*** | **11*** | **12*** | **13*** | **14** | **15** | **16** | **17** | **18** | **19** |
|---|---|---|---|---|---|---|---|---|---|---|---|---|
| F | MPa | 22,8 | 21,3 | 22,6 | 20,7 | 15,2 | 22,4 | 21,6 | 21,9 | 20,7 | 21,6 | 22,3 |
| D | % | 157 | 159 | 161 | 148 | 508 | 142 | 141 | 136 | 138 | 208 | 165 |
| S100 | MPa | 13,1 | 11,8 | 13,4 | 13,1 | 2,2 | 14,2 | 13,9 | 14,4 | 13,7 | 7,8 | 11,7 |
| Härte | Shore A | 78 | 76 | 78 | 78 | 63 | 79 | 78 | 80 | 79 | 73 | 76 |

**Tabelle 9B: Messung des Druckverformungsrestes gemäß DIN 53517A bei 150°C, 168 h und 25% Verformung**

| **Beispiel** | | **9*** | **10*** | **11*** | **12*** | **13*** | **14** | **15** | **16** | **17** | **18** | **19** |
|---|---|---|---|---|---|---|---|---|---|---|---|---|
| C.S. | % | 27,6 | 29,3 | 29,4 | 31,7 | 75,8 | 29,6 | 30,3 | 30,9 | 30,9 | 39,1 | 30,9 |

**Tabelle 9C: Zugversuch am Stab S2 bei RT gemäß DIN 53504, Härte Shore A bei RT gemäß DIN 53505 unter Einsatz von Stäben, die für 7 Tage bei 150°C unter Heißluft gelagert wurden.**

| **Beispiel** | | **9*** | **10*** | **11*** | **12*** | **13*** | **14** | **15** | **16** | **17** | **18** | **19** |
|---|---|---|---|---|---|---|---|---|---|---|---|---|
| F | MPa | 22,9 | 22,2 | 23,7 | 22,8 | 15,7 | 22,8 | 22,8 | 23,3 | 23 | 21,6 | 22,2 |
| D | % | 141 | 147 | 136 | 138 | 470 | 125 | 132 | 129 | 134 | 200 | 149 |
| S100 | MPa | 16,6 | 15,5 | 17,6 | 17,3 | 5,4 | 18,9 | 18,1 | 19 | 18 | 12,5 | 16 |
| Härte | Shore A | 84 | 84 | 85 | 85 | 76 | 86 | 85 | 87 | 87 | 82 | 84 |

**Tabelle 9D: Zugversuch am Stab S2 bei RT gemäß DIN 53504, Härte Shore A bei RT gemäß DIN 53505 unter Einsatz von Stäben, die für 7 Tage bei 150°C in einem Motorenöl "Shell Helix 5W40" gelagert wurden.**

| **Beispiel** | | **9*** | **10*** | **11*** | **12*** | **13*** | **14** | **15** | **16** | **17** | **18** | **19** |
|---|---|---|---|---|---|---|---|---|---|---|---|---|
| F | MPa | 25,2 | 22,9 | 26,6 | 23,3 | 24,7 | 25,1 | 21,8 | 25 | 24,1 | 23,7 | 23,7 |
| D | % | 130 | 126 | 135 | 124 | 287 | 125 | 113 | 126 | 124 | 160 | 134 |
| S100 | MPa | 18,7 | 17,5 | 19,9 | 18,8 | 6,4 | 19,5 | 18,8 | 19,6 | 19,4 | 12,7 | 16,9 |
| Härte | Shore A | 79 | 78 | 80 | 80 | 69 | 80 | 79 | 81 | 81 | 75 | 78 |
| Volumenänderung (vor und nach der Lagerung in Motorenöl) % | | 1,32 | 1,73 | -1,24 | -1,13 | 2,15 | 0,61 | 1,16 | -1,88 | -1,75 | 2,3 | 1,83 |

Der Vergleich der Mischungen ohne *-Kennzeichnung auf Basis von HNBR Kautschuk mit den Beispielen mit *-Kennzeichnung zeigt wiederum deutliche Vorteile in der Kombination von schneller Vernetzung (kleine Werte TS2 und 50% Umsatzzeiten - entspricht kurzen Entformungs/ Zyklus-zeiten im 2K Prozess) mit niedrigen Druckverformungsrest-Werten bei sonst exzellenten physikalischen Eigenschaften wie hoher Festigkeit und niedriger Volumenquellung in z.B. Motoröl. Der Versuch der Simulierung des Vulkanisationsverhaltens in einem 2K- Werkzeug mittels einer kurzzeitigen Oberflächenerhitzung in einer Presse kombiniert mit einem nachgeschalteten drucklosen Temper-Prozess mit einer angepassten Temperung (in diesem Fall zweistufig) zeigt, dass auch nach diesem Verfahren blasenfreie Formteile mit vergleichbaren Eigenschaften zu einer klassischen Vulkanisation unter Druck erhalten werden, siehe Tabelle 10.

### Tabellen 10: Vulkanisatprüfungen an den getemperten Mischungen 9-19

Zur Prüfung der Eigenschaften von Vulkanisaten der getemperten Mischungen 9 bis 19 wurden 2 bzw. 6 mm dicke, 100 mm*100 mm Prüfplatten zwischen 1 mm Teflonfolie in einer vorgeheizten Plattenpresse geheizt und gepresst, danach entnommen und im Anschluß im Temperofen in Heißluft für 20 min bei 160°C und 20 min bei 170°C drucklos getempert.

**Tabelle 10A: Heizzeiten für die Vulkanisation von 100 mm* 100 mm Prüfplatten.**

| **Beispiel** | **9*** | **10*** | **11*** | **12*** | **13*** | **14** | **15** | **16** | **17** | **18** | **19** |
|---|---|---|---|---|---|---|---|---|---|---|---|
| Heizzeit für 2mm dicke Platte sec | 80 | 120 | 100 | 120 | 45 | 30 | 40 | 30 | 50 | 80 | 70 |
| Heizzeit für 6mm dicke Platte sec | 110 | 150 | 130 | 150 | 75 | 60 | 70 | 60 | 80 | 110 | 100 |

**Tabelle 10B: Zugversuch am Stab S2 (ausgestanzt aus den Prüfplatten gemäß Tabelle 10A) bei RT gemäß DIN 53504, Härte Shore A bei RT gemäß DIN 53505**

| **Beispiel** | | **9*** | **10*** | **11*** | **12*** | **13*** | **14** | **15** | **16** | **17** | **18** | **19** |
|---|---|---|---|---|---|---|---|---|---|---|---|---|
| F | MPa | 20,4 | 18,7 | 20,3 | 19 | 14,7 | 18,4 | 19,9 | 19,4 | 18,3 | 21,3 | 20,4 |
| D | % | 156 | 155 | 158 | 159 | 509 | 132 | 140 | 146 | 142 | 233 | 169 |
| S100 | MPa | 12,3 | 11,9 | 12,7 | 11,4 | 2,7 | 13,2 | 12,9 | 13,3 | 12,8 | 7,2 | 10.3 |
| Härte | Shore A | 78 | 77 | 78 | 78 | 68 | 80 | 80 | 82 | 80 | 74 | 77 |

**Tabelle 10C: Zugversuch: Stab S2 bei RT gemäß DIN 53504 (ausgestanzt aus den Prüfplatten gemäß Tabelle 10A), Härte bei RT gemäß DIN 53505 unter Einsatz von der Stäbe, die 7 Tage bei 150°C in Motorenöl "Shell Helix 5 W40" gelagert wurden.**

| **Beispiel** | | **9*** | **10*** | **11*** | **12*** | **13*** | **14** | **15** | **16** | **17** | **18** | **19** |
|---|---|---|---|---|---|---|---|---|---|---|---|---|
| F | MPa | 20,1 | 19,8 | 21 | 20,1 | 23,4 | 19 | 21,7 | 18,3 | 19,9 | 21,8 | 21,8 |
| D | % | 126 | 132 | 126 | 131 | 338 | 115 | 132 | 110 | 126 | 177 | 150 |
| S100 | MPa | 15,1 | 14,6 | 16,2 | 14,9 | 5,2 | 16,1 | 15,8 | 16,5 | 15,6 | 10,8 | 13,7 |
| Härte | Shore A | | | | | 70 | | 80 | | | 76 | 78 |
| Volumenänderung (vor und nach Lagerung in Motorenöl) % | | 4,43 | 4,18 | 1,49 | 1,43 | 4,16 | 3,83 | 4,26 | 1,4 | 1,62 | 4,14 | 4,02 |

### Beispiele 20-28:

Gemäß der angegebenen Vorgehensweise wurden die Mischungen 20-28 mit den in Tabelle 11 angegebenen Zusammensetzungen hergestellt. Die mit * gekennzeichneten Mischungen stellen Beispiele dar, die bei Kombination mit einer Thermoplast-Komponente zu Vergleichbeispielen führen würden und die ungekennzeichneten Mischungen stellen Zusammensetzungen dar, die bei Kombination mit einer Thermoplast-Komponente zu erfindungsgemäßen Beispielen führen würden.

**Tabelle 11: Zusammensetzung der Mischungen 20-28**

| **Beispiel** | **20*** | **21*** | **22*** | **23*** | **24*** | **25*** | **26** | **27** | **28** |
|---|---|---|---|---|---|---|---|---|---|
| Levapren^{®} 700 | 100 | 100 | 100 | | | | 100 | 100 | |
| Levapren^{®} 600 | | | | 100 | 100 | 100 | | | 100 |
| Corax^{®} N 550 | 30 | 30 | 30 | 30 | 30 | 30 | 30 | 30 | 30 |
| Thermax^{®} N 990 | 30 | 30 | 30 | 30 | 30 | 30 | 20 | 30 | 30 |
| Vulkasil^{®} A1 | 10 | 10 | 10 | 10 | 10 | 10 | 10 | 10 | 10 |
| Rhenofit^{®} DDA-70 | 1 | 1 | 1 | 1 | 1 | 1 | 1 | 1 | 1 |
| Vulkanox^{®} ZMB2/C5 | 0,5 | 0,5 | 0,5 | 0,5 | 0,5 | 0,5 | 0,5 | 0,5 | 0,5 |
| Zinkoxyd aktiv | 2 | 2 | 2 | 2 | 2 | 2 | 2 | 2 | 2 |
| Maglite^{®} DE | 2 | 2 | 2 | 2 | 2 | 2 | 2 | 2 | 2 |
| EDENOR^{®} C 18 98-100 | 1 | 1 | 1 | 1 | 1 | 1 | 1 | 1 | 1 |
| Rhenogran^{®} PCD50 | 3 | 3 | 3 | 3 | 3 | 3 | 3 | 3 | 3 |
| DIAK^{®} No.7 | 3 | 3 | 3 | 3 | 3 | 3 | 3 | 3 | 3 |
| PERKADOX^{®} 14-40 B-PD | 12 | | | 12 | | | 7 | 8 | 8 |
| Trigonox^{®} 29 | | 12 | 16 | | 12 | 16 | 7 | 8 | 8 |
| **Gesamt phr** | **195** | **195** | **199** | **195** | **195** | **199** | **187** | **199** | **199** |

### Tabellen 12: Mischungsprüfungen an den Mischungen 20-28

Die Bestimmung der in Tabelle 12 A angegebenen Mooney-Viskosität (ML 1+4 @ 100°C) erfolgte gemäß DIN D.1646.

**Tabelle 12A:**

| **Beispiel** | **20*** | **21*** | **22*** | **23*** | **24*** | **25*** | **26** | **27** | **28** |
|---|---|---|---|---|---|---|---|---|---|
| ML 1+4@ 100 °C | 43 | 44 | 41 | 45 | 46 | 43 | 39 | 40 | 42 |

**Tabelle 12B: Prüfung der Mischung an der Monsanto MDR 2000 bei einer Prüftemperatur von 160°C; Prüfzeit: 30 min**

| **Beispiel** | **20*** | **21*** | **22*** | **23*** | **24*** | **25*** | **26** | **27** | **28** |
|---|---|---|---|---|---|---|---|---|---|
| Drehmoment- | 0,61 | 0,79 | 0,76 | 0,75 | 0,93 | 0,93 | 0,6 | 0,69 | 0,81 |
| Minimum / dNm | | | | | | | | | |
| Drehmoment- | 44 | 23,6 | 26,4 | 47,4 | 26,4 | 29,5 | 31,3 | 39,3 | 41,3 |
| Maximum / dNm | | | | | | | | | |
| Anstiegszeit TS2 / | 1,43 | 0,43 | 0,38 | 1,34 | 0,4 | 0,35 | 0,59 | 0,55 | 0,48 |
| min | | | | | | | | | |
| Umsatzzeit 50% / | 6,09 | 0,75 | 0,64 | 5,82 | 0,7 | 0,59 | 1,92 | 2,42 | 1,63 |
| min | | | | | | | | | |

**Tabelle 12C: Prüfung der Mischung an der Monsanto MDR 2000 bei einer Prüftemperatur von 170°C, Prüfzeit: 30 min**

| **Beispiel** | **20*** | **21*** | **22*** | **23*** | **24*** | **25*** | **26** | **27** | **28** |
|---|---|---|---|---|---|---|---|---|---|
| Drehmoment-Minimum / dNm | 0,57 | 0,79 | 0,78 | 0,69 | 0,93 | 0,93 | 0,57 | 0,68 | 0,81 |
| Drehmoment-Maximum / dNm | 44,5 | 23,8 | 26,4 | 47,3 | 26,5 | 29,6 | 33 | 39 | 41,4 |
| Anstiegszeit TS2 min / | 0,7 | 0,3 | 0,27 | 0,67 | 0,28 | 0,26 | 0,39 | 0,35 | 0,34 |
| Umsatzzeit 50% / min | 2,33 | 0,43 | 0,39 | 2,25 | 0,41 | 0,38 | 0,94 | 0,96 | 0,75 |

### Tabellen 13: Prüfungen an den Vulkanisaten aus den Mischungen 20-28

**Tabelle 13A: Zugversuch: Prüfung am Stab S2 bei RT gemäß DIN 53504, Messung der Härte bei RT gemäß DIN 53505**

| | **Beispiel** | **20*** | **21*** | **22*** | **23*** | **24*** | **25*** | **26** | **27** | **28** |
|---|---|---|---|---|---|---|---|---|---|---|
| F | MPa | 13,6 | 16,2 | 12,1 | 12,8 | 16,6 | 14,9 | 13,8 | 14,4 | 14,6 |
| D | % | 69 | 153 | 103 | 64 | 136 | 113 | 96 | 87 | 82 |
| S100 | MPa | | 10,5 | 11,8 | | 12,1 | 13 | | | |
| Härte | Shore A | 85 | 76 | 78 | 84 | 76 | 78 | 79 | 83 | 82 |

**Tabelle 13B: Messung des Druckverformungsrestes (Compression Set, auch als "C.S." abgekürzt) gemäß DIN 53517A bei 150°C, 168 h und 25% Verformung**

| **Beispiel** | | **20*** | **21*** | **22*** | **23*** | **24*** | **25*** | **26** | **27** | **28** |
|---|---|---|---|---|---|---|---|---|---|---|
| C.S. | % | 32,6 | 29,5 | 33,1 | 31 | 28 | 30,9 | | 33,2 | 31 |

**Tabelle 13C: Zugversuch am Stab S2 bei RT gemäß DIN 53504, Härte bei RT gemäß DIN 53505 unter Verwendung von Stäben, die 7 Tage bei 150°C unter Heißluft gelagert wurden.**

| **Beispiel** | | **20*** | **21*** | **22*** | **23*** | **24*** | **25*** | **26** | **27** | **28** |
|---|---|---|---|---|---|---|---|---|---|---|
| F | MPa | 18 | 16,5 | 17,3 | 17,9 | 17,2 | 17,7 | | 18,1 | 17,5 |
| D | % | 90 | 173 | 152 | 87 | 156 | 140 | | 109 | 96 |
| S100 | MPa | | 11,4 | 12,9 | | 12,3 | 13,9 | | 16,8 | |
| Härte | Shore A | 88 | 81 | 83 | 87 | 80 | 82 | | 88 | 85 |

**Tabelle 13D: Zugversuch am Stab S2 bei RT gemäß DIN 53504, Härte bei RT gemäß DIN 53505 unter Verwendung von Stäben, die 7 Tage bei 150°C in Motorenöl "Shell Helix 5W40" gelagert wurden.**

| **Beispiel** | | **20*** | **21*** | **22*** | **23*** | **24*** | **25*** | **26** | **27** | **28** |
|---|---|---|---|---|---|---|---|---|---|---|
| F | MPa | 16,5 | 16,5 | 14,6 | 14 | 14,3 | 14,1 | | 14,8 | 15,3 |
| D | % | 76 | 135 | 106 | 69 | 109 | 99 | | 80 | 78 |
| S100 | MPa | | 12,4 | 13,5 | | 13 | 14,3 | | | |
| Härte | Shore A | 82 | 73 | 75 | 77 | 67 | 70 | | 79 | 75 |
| Volumenänderung (vor und nach Lagerung in Motorenöl) % | | 5,82 | 6,82 | 6,16 | 14,3 | 16,7 | 15,5 | | 5,74 | 14,1 |

Der Vergleich der Mischungen ohne *-Kennzeichnung auf Basis von EVM Kautschuk mit den Beispielen mit *-Kennzeichnung zeigt wiederum deutliche Vorteile in der Kombination von schneller Vernetzung (kleine TS2 Werte und 50% Umsatzzeiten - entspricht kurzen Entformungs/Zykluszeiten im 2K Prozess) mit niedrigen Druckverformungsrest Werten und hohen Vemetzungsdichten (Härte).

### Beispiel 29-33:

Gemäß der angegebenen Vorgehensweise wurden die Mischungen 29-33 mit den in Tabelle 14 angegebenen Zusammensetzungen hergestellt.

Die mit * gekennzeichneten Mischungen stellen Beispiele dar, die bei Kombination mit einer Thermoplast-Komponente zu Vergleichsbeispielen im Sinne dieser Anmeldung führen würden. Die ungekennzeichneten Mischungen besitzen dagegen Zusammensetzungen, die bei Kombination mit einer Thermoplast-Komponente zu erfindungsgemäßen Beispielen in Sinne dieser Anmeldung führen würden.

**Tabellen 14: Zusammensetzung der Mischungen 29-33**

| **Beispiel** | **29*** | **30*** | **31*** | **32** | **33** |
|---|---|---|---|---|---|
| Buna^{®} EPG 5450 | 100 | 100 | 100 | 100 | -- |
| Buna^{®} EPT 2450 | -- | -- | -- | -- | 100 |
| Corax^{®} N 550 | 30 | 30 | 30 | 30 | 20 |
| Thermax^{®} N 990 | 30 | 30 | 30 | 30 | 20 |
| Vulkasil^{®} A1 | 10 | 10 | 10 | 10 | 10 |
| Rhenofit^{®} DDA-70 | 1,5 | 1,5 | 1,5 | 1,5 | 1,5 |
| Vulkanox^{®} ZMB2/C5 | 0,5 | 0,5 | 0,5 | 0,5 | 0,5 |
| Zinkoxyd aktiv | 2 | 2 | 2 | 2 | 2 |
| Maglite^{®} DE | 2 | 2 | 2 | 2 | 2 |
| DIAK^{®} No. 7 | 3 | 3 | 3 | 3 | 3 |
| PERKADOX^{®} 14-40 | 12 | -- | -- | 8 | 6 |
| B-PD | | | | | |
| Trigonox^{®} 29 | | 12 | 16 | 8 | 6 |
| **Gesamt phr** | **191** | **191** | **195** | **195** | **171** |

### Tabellen 15: Prüfungen an den Mischungen 29-33

Die Bestimmung der in Tabelle 15 A angegebenen Mooney-Viskosität (ML 1+4 @100°C) erfolgte gemäß DIN D 1646.

**Tabelle 15A:**

| **Beispiel** | **29*** | **30*** | **31*** | **32** | **33** |
|---|---|---|---|---|---|
| ML 1+4@100°C | 108 | 115 | 113 | 111 | 53 |

**Tabelle 15B: Prüfung der Mischung an der Monsanto MDR 2000 bei einer Prüftemperatur von 160°C, Prüfzeit: 30 min**

| **Beispiel** | **29*** | **30*** | **31*** | **32** | **33** |
|---|---|---|---|---|---|
| Drehmoment-Minimum / dNm | 2,97 | 3,77 | 3,81 | 3,56 | 1,21 |
| Drehmoment-Maximum / dNm | 72,8 | 43,1 | 50,5 | 73,3 | 46,8 |
| Anstiegszeit TS2/min | 0,84 | 0,37 | 0,34 | 0,41 | 0,57 |
| Umsatzzeit 50% / min | 9,38 | 0,93 | 0,84 | 3,35 | 3,41 |

**Tabelle 15C: Prüfung der Mischung an der Monsanto MDR 2000 bei einer Prüftemperatur von 170°C, Prüfzeit 30 min**

| **Beispiel** | **29*** | **30*** | **31*** | **32** | **33** |
|---|---|---|---|---|---|
| Drehmoment-Minimum / dNm | 2,81 | 3,72 | 3,77 | 3,49 | 1,15 |
| Drehmoment-Maximum / dNm | 72,2 | 40,1 | 46,6 | 70 | 50,3 |
| Anstiegszeit TS2/min | 0,51 | 0,28 | 0,26 | 0,3 | 0,39 |
| Umsatzzeit 50% / min | 3,48 | 0,51 | 0,48 | 1,34 | 1,77 |

### Tabellen 16: Prüfungen an den Vulkanisaten aus den Mischungen 29-33

**Tabelle 16A: Zugversuch: Prüfung am Stab S2 bei RT gemäß DIN 53504, Messung der Härte bei RT gemäß DIN 53505**

| **Beispiel** | | **29*** | **30*** | **31*** | **32** | **33** |
|---|---|---|---|---|---|---|
| F | MPa | 11,6 | 13,9 | 12,3 | 10,2 | 9,3 |
| D | % | 70 | 159 | 123 | 67 | 105 |
| S100 | MPa | | 7 | 9,1 | | 8,6 |
| Härte | Shore A | 84 | 77 | 80 | 84 | 79 |

**Tabelle 16B: Messung des Druckverformungsrestes("C.S.") gemäß DIN 53517A bei 150°C, 168 h und 25% Verformung**

| | **Beispiel** | **29*** | **30*** | **31*** | **32** |
|---|---|---|---|---|---|
| C.S. | % | 22,2 | 29 | 27,1 | 26 |

**Tabelle 16C: Zugversuch am Stab S2 bei RT gemäß DIN 53504, Härte bei RT gemäß DIN 53505 unter Verwendung von Stäben, die 7 Tage bei 150°C unter Heißluft gelagert wurden.**

| **Beispiel** | | **29*** | **30*** | **31*** | **32** |
|---|---|---|---|---|---|
| F | MPa | 12,5 | 16,3 | 16,1 | 12 |
| D | % | 67 | 171 | 143 | 70 |
| S100 | MPa | | 7,9 | 9,9 | |
| Härte | Shore A | 85 | 78 | 81 | 86 |

**Tabelle 16D: Zugversuch am Stab S2 bei RT gemäß DIN 53504, Härte bei RT gemäß DIN 53505 unter Verwendung von Stäben, die 7 Tage bei 150°C in Motorenöl "Shell Helix 5W40" gelagert wurden.**

| **Beispiel** | | **29*** | **30*** | **311*** | **32** | **33** |
|---|---|---|---|---|---|---|
| F | MPa | 5 | 4,4 | 7,1 | 5 | 14,3 |
| D | % | 35 | 56 | 70 | 36 | 109 |
| S100 | MPa | | | | | 13 |
| Härte | Shore A | 76 | 61 | 66 | 75 | 67 |
| Volumenänderung (vor und nach der Lagerung in Motorenöl) % | | 58,2 | 46,2 | 76,3 | 66,3 | 47,2 |

Der Vergleich der Mischungen auf Basis von EPDM Kautschuk ohne *-Kennzeichnung mit den Beispielen mit *-Kennzeichnung zeigt wiederum deutliche Vorteile in der Kombination von schneller Vernetzung (kleine TS2 Werte und 50% Umsatzzeiten - entspricht kurzen Entformungs/ Zykluszeiten im 2K Prozess) mit niedrigen Druckverformungsrest Werten und hohen Vernetzungsdichten (Härte).

### Tabellen 17: Vulkanisatprüfungen an den getemperten Mischungen 29-33

**Tabelle 17A: Formköper zur Herstellung von 100 mm* 100 mm Prüfplatten mit einer Dicke von 2 bzw. 6 mm werden zwischen 1mm Teflonfolie in vorgeheizter Plattenpresse geheizt und gepresst, danach entnommen und im Anschluß im Temperofen (Heißluft) für 20 min bei 160°C und 20 min bei 170°C drucklos getempert.**

| **Beispiel:** | **29*** | **30*** | **31*** | **32** |
|---|---|---|---|---|
| Heizzeit für 2mm Platte/ sec | 40 | 30 | 30 | 30 |
| Heizzeit für 6mm Platte/ sec | 70 | 60 | 60 | 60 |

**Tabelle 17B: Zugversuch am Stab S2 bei RT gemäß DIN 53504; Härte bei RT gemäß DIN 53505 unter Verwendung von Stäben**

| **Beispiel:** | | **29*** | **30*** | **31*** | **32** |
|---|---|---|---|---|---|
| F | MPa | 6,7 | 14,4 | 14,7 | 7,8 |
| D | % | 61 | 181 | 159 | 66 |
| S 100 | MPa | | 5,9 | 7,3 | |
| Härte | Shore A | 78 | 75 | 77 | 83 |

**Tabelle 17C: Zugversuch am Stab S2 bei RT gemäß DIN 53504, Härte bei RT gemäß DIN 53505 unter Verwendung von Stäben, die 7 Tage bei 150°C in Motorenöl "Shell Helix 5W40" gelagert wurden.**

| **Beispiel:** | | **29*** | **30*** | **31*** | **32** |
|---|---|---|---|---|---|
| F | MPa | 1.6 | 5,5 | 6,3 | 4,7 |
| D | % | 19 | 74 | 71 | 40 |
| S100 | MPa | | | | |
| Härte | Shore A | 64 | 58 | 62 | 68 |
| Volumenänderung (vor und nach der Lagerung in Motorenöl) % | | 72,7 | 89,2 | 77,7 | 62,8 |

Der Versuch der Simulierung des Vulkanisationsverhaltens in einem 2K Werkzeug mittels einer kurzzeitigen Oberflächenerhitzung in einer Presse kombiniert mit einem nachgeschalteten drucklosen Temper-Prozess zeigt, dass auch nach diesem Verfahren Formteile mit vergleichbaren Eigenschaften zu einer klassischen Vulkanisation unter Druck erhalten werden, siehe Tabelle 17.

### Beispiel 34-37:

Gemäß der angegebenen Vorgehensweise wurden die Mischungen 34-37 mit den in Tabelle 14 angegebenen Zusammensetzungen hergestellt.

Die mit * gekennzeichneten Mischungen stellen Beispiele dar, die bei Kombination mit einer Thermoplast-Komponente zu Vergleichsbeispielen im Sinne dieser Anmeldung führen würden, und die ungekennzeichneten Mischungen besitzen Zusammensetzungen, die bei Kombination mit einer Thermoplast-Komponente zu erfindungsgemäßen Beispielen im Sinne dieser Anmeldung führen würden.

**Tabelle 18: Zusammensetzung der Mischungen 34-37**

| **Beispiel** | **34*** | **35*** | **36*** | **37** |
|---|---|---|---|---|
| VAMAC^{®} D | 100 | 100 | 100 | 100 |
| Corax^{®} N 550 | 30 | 30 | 30 | 30 |
| Thermax^{®} N 990 | 30 | 30 | 30 | 30 |
| Rhenofit^{®} OCD | 1 | 1 | 1 | 1 |
| Armeen^{®} 18 D Prills | 1 | 1 | 1 | 1 |
| DIAK^{®} No. 7 | 3 | 3 | 3 | 3 |
| PERKADOX^{®} 14-40 B-PD | 12 | | | 8 |
| Trigonox^{®} 29 | | 12 | 16 | 8 |
| **Gesamt phr** | 177 | 177 | 181 | 181 |

### Tabellen 19: Prüfungen an den Mischungen 34-37

Die Bestimmung der in Tabelle 19 A angegebenen Mooney-Viskosität (ML 1+4 @ 100°C) erfolgte gemäß DIN D 1646.

**Tabelle 19A: Mooney-Viskosität**

| Beispiel | 34* | 35* | 36* | 37 |
|---|---|---|---|---|
| ML 1+4/ ME | 25 | 25 | 24 | 22 |

### Prüfung des Vulkanisationsverhaltens

**Tabelle 19B: Prüfung der Mischungen an der Monsanto MDR 2000 bei einer Prüftemperatur von 160°C, Prüfzeit: 30 min**

| **Beispiel** | **34*** | **35*** | **36*** | **37** |
|---|---|---|---|---|
| Drehmoment-Minimum / dNm | 0,36 | 0,42 | 0,42 | 0,38 |
| Drehmoment-Maximum / dNm | 26,9 | 6,17 | 8,88 | 22,5 |
| Anstiegszeit TS2/min | 3,27 | 0,99 | 0,74 | 1,31 |
| Umsatzzeit 50% / min | 11 | 1,33 | 1,24 | 8 |

**Tabelle 19C: Prüfung der Mischungen an der Monsanto MDR 2000 bei einer Prüftemperatur von 170°C, Prüfzeit 30 min**

| **Beispiel** | **34*** | **35*** | **36*** | **37** |
|---|---|---|---|---|
| Drehmoment-Minimum / dNm | 0,35 | 0,41 | 0,41 | 0,35 |
| Drehmoment-Maximum /dNm | 26,8 | 5,51 | 7,99 | 22 |
| Anstiegszeit TS2 / min | 1,56 | 0,58 | 0,45 | 0,7 |
| Umsatzzeit 50% /min | 4,64 | 0,68 | 0,61 | 3,45 |

### Tabellen 20: Prüfungen an den Vulkanisaten aus den Mischungen 34-37

**Tabelle 20A: Zugversuch am Stab S2 bei 20°C gemäß DIN 53504, Härte bei 20°C gemäß DIN 53505**

| **Beispiel** | | **34*** | **35*** | **36*** | **37** |
|---|---|---|---|---|---|
| F | MPa | 11,9 | 10,2 | 11,1 | 11,5 |
| D | % | 84 | 284 | 229 | 97 |
| S100 | MPa | | 3 | 4,1 | 12,5 |
| Härte | Shore A | 75 | 54 | 58 | 72 |

**Tabelle 20B: Messung des Druckverformungsrestes ("C.S.) gemäß DIN 53517A bei 150°C, 168 h und 25% Verformung**

| **Beispiel** | | **34*** | **35*** | **36*** | **37** |
|---|---|---|---|---|---|
| C.S. | % | 31,8 | 38.7 | 37 | 35,2 |

**Tabelle 20C: Zugversuch am Stab S2 bei RT gemäß DIN 53504, Härte bei RT gemäß DIN 53505 unter Verwendung von Stäben, die 7 Tage bei 150°C unter Heißluft gelagert wurden.**

| **Beispiel** | | **34*** | **35*** | **36*** | **37** |
|---|---|---|---|---|---|
| F | MPa | 16,5 | 11,1 | 12,8 | 15,9 |
| D | % | 109 | 343 | 255 | 125 |
| S100 | MPa | 15 | 3,3 | 4,8 | 12,4 |
| Härte | Shore A | 79 | 63 | 66 | 77 |

**Tabelle 20D: Zugversuch am Stab S2 bei RT gemäß DIN 53504, Härte bei RT gemäß DIN 53505 unter Verwendung von Stäben, die 7 Tage bei 150°C in Motorenöl "Shell Helix 5W40" gelagert wurden**

| **Beispiel** | | **34*** | **35*** | **36*** | **37** |
|---|---|---|---|---|---|
| F | MPa | 12,5 | 11,5 | 11,4 | 11,7 |
| D | % | 88 | 227 | 166. | 92 |
| S100 | MPa | | 4,1 | 5,7 | |
| Härte | Shore A | 71 | 57 | 61 | 70 |
| Volumenänderung (vor und nach der Lagerung in Motorenöl) % | | 7,5 | 7,9 | 7,2 | 7,0 |

Der Vergleich der nicht mit * gekennzeichneten Mischungen auf Basis von EAM Kautschuk mit den Beispielen mit *-Kennzeichnung zeigt wiederum deutliche Vorteile in der Kombination von schneller Vernetzung (kleine TS2 Werte und 50% Umsatzzeiten - entspricht kurzen Entformungs/ Zykluszeiten im 2K Prozess) mit niedrigen Druckverformungsrest Werten und hohen Vemetzungsdichten (siehe hohe Härte Werte).

### Herstellung von Kautschuk-Thermoplast-Verbundgegenständen

Eingesetzt wurde als Elastomer-Komponente diejenige des Beispiels 6 auf Basis von HNBR..

Als thermoplastische Komponente wurden folgende Materialien eingesetzt:
1. Durethan^{®} BKV 30: PA 6,30 % Glasfaser verstärkt; Handelsprodukt der Lanxess Deutschland GmbH
2. Durethan^{®} BKV 35 H2.0: PA 6, Spritzgießtyp, 35 % Glasfasern, wärmestabilisiert; Handelsprodukt der Lanxess Deutschland GmbH
3. Durethan^{®} BKV 50 H1.0: PA 6, Spritzgießtyp; 50 % Glasfasern, wärmestabilisiert; Handelsprodukt der Lanxess Deutschland GmbH
4. Durethan^{®} BKV 50 H2.0: PA 6, Spritzgießtyp, 50 % Glasfasern, wärmestabilisiert; Handelsprodukt der Lanxess Deutschland GmbH
5. Durethan^{®} BKV 60 H2.0: PA 6, Spritzgießtyp, 60 % Glasfasern, niedrigviskos, leichtfließend (Easy Flow); Handelsprodukt der Lanxess Deutschland GmbH
6. Durethan^{®} AKV 30 H2.0: PA 66, Spritzgießtyp, 30 % Glasfasern, wärme- und hydrolysestabilisiert; Handelsprodukt der Lanxess Deutschland GmbH
7. Durethan^{®} AKV 30 H1.0: PA 66, Spritzgießtyp, 30 % Glasfasern, wärmestabilisiert; Handelsprodukt der Lanxess Deutschland GmbH
8. Durethan^{®} AKV 35 HR H2.0: PA 66, Spritzgießtyp, 35 % Glasfasern, wärme- und hydrolysestabilisiert; Handelsprodukt der Lanxess Deutschland GmbH
9. Durethan^{®} AKV 50 H1.0: PA 66, Spritzgießtyp, 50 % Glasfasern, wärmestabilisiert; Handelsprodukt der Lanxess Deutschland GmbH
10. Durethan^{®} AKV 50 H2.0: PA 66, Spritzgießtyp, 50 % Glasfasern, wärmestabilisiert; Handelsprodukt der Lanxess Deutschland GmbH
11. PA 6, Lösungsviskosität in m-Kresol 3,0, 30 % Glasfasern, wärmestabilisiert, ("JADE 4706-A")
12. Copolyamid aus PA 6 mit 5 % PA66-Anteil, Viskosität in m-Kresol 3,0, 30 % Glasfasern, wärmestabilisiert ("JADE 4706-B")
13. PA 66, Viskosität in m-Kresol 3,0, 30 % Glasfasern, wärmestabilisiert ("JADE 4706-C")

### I Beispiel 1 zur Herstellung von Thermoplast-Kautschuk Verbund-Formteilen

Aus den oben genannten Polyamiden 1-13 als thermoplastische Komponente und jeweils der Mischung des og. Beispiels 6 als Kautschukomponente wurden in einem Versuchswerkzeug im Mehrkomponentenspritzgießverfahren mittels der Drehtellertechnik Thermoplast-Kautschuk Verbund-Formteile hergestellt. Hierzu wurde zunächst der Vorspritzling aus der thermoplastischen Formmasse gefertigt. Das Einspritzen des Thermoplasten erfolgte bei einer Zylindertemperatur von 280°C, bei spezifischen Spritzdrücken im bevorzugten Bereich bei 600 bar. Anschließend öffnete das Werkzeug, die bewegliche Werkzeughälfte, in der der Vorspritzling verblieb, wurde um 180° gedreht und wieder geschlossen. Der Vorspritzling befand sich nun in der geometrisch veränderten Kautschukkavität, und wurde im Spritzgussverfahren mit der Kautschukkomponente komplettiert. Der spezifische Spritzdruck der Kautschukkomponente lag im bevorzugten Bereich bei 1500 bar, bei einer bevorzugten Massetemperatur von 95°C. Nach der Formfüllung wurde der Kautschuk zum Erreichen der Formstabilität bei einer Werkzeugtemperatur von 190°C vernetzt und nach einer Heizzeit von 45 sec. entformt. Parallel zum Einspritzvorgang der Kautschukkomponente wurde bereits erneut der thermoplastische Vorspritzling gefertigt. Im nachgeschalteten Temperprozess wurde die Vulkanisation zur Einstellung des gewünschten Eigenschaftsprofils vervollständigt. Dabei wurde entweder für 120 Minuten bei 170°C (Variante a) oder 60 Minuten bei 180°C (Variante b) getempert.

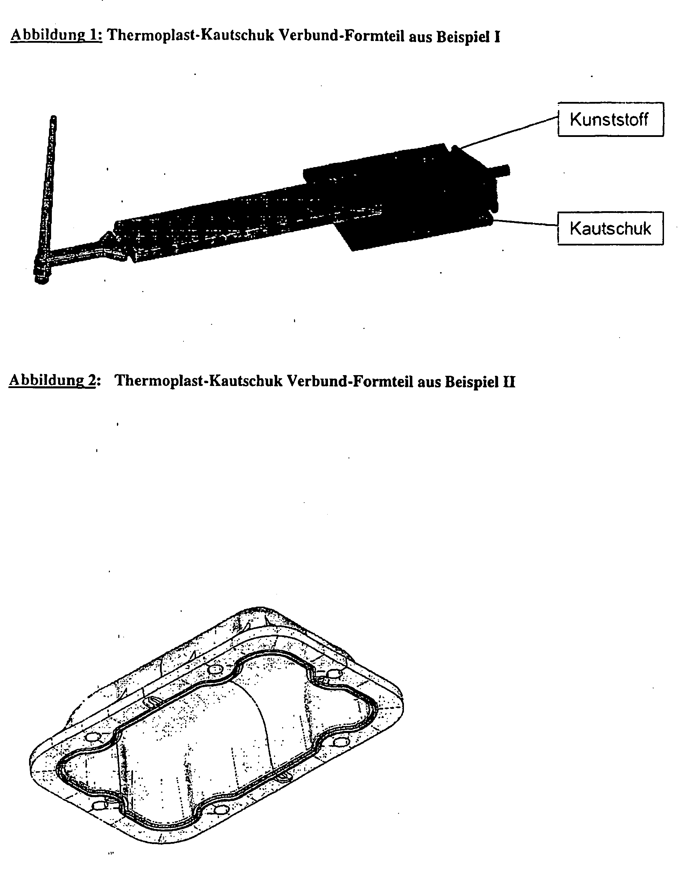

### Abbildung 1 zeigt eine Skizze des Thermoplast-Kautschuk Verbund-Formteils

### Prüfung der Thermoplast-Kautschuk Verbund-Formteilen aus Beispiel I

Die Prüfung der Verbundhaftung zwischen Thermoplast und vulkanisiertem Kautschuk wurde mittels Zugprüfungen durchgeführt. Hierzu wurden die Probekörper in eine Zugmaschine eingespannt und bis zum Versagen des Verbundes geprüft. Es wurde gefunden, dass die auf Basis Produkte "JADE 4706-A", "JADE 4706-B" und "WADE 4706-C", bei denen es sich um Modifikationen von Handelsprodukten handelt, höhere Haftfestigkeiten aufzeigten, als die zugehörigen Handelsprodukte. Ebenfalls zeigten die Haftungsuntersuchungen, dasss die Temperung nach der oben genannten Variante a) zu höheren Haftfestigkeiten führt als eine Temperung nach der oben genannten Variante b). Die notwendige Temperzeit reduziert sich, wenn die Probekörper bzw. Bauteile direkt nach der Entnahme aus der Spritzgussmaschine fortlaufend dem Temperprozess zugeführt werden. Es hat sich herausgestellt, dass eine zeitlich versetzte Steigerung der Temperatur im Temperprozess, eine Art Temperaturrampe, zu einer weiteren optimierten Zerfallskinetik der Peroxide führt und die Bauteileigenschaften verbessert. Anhand dieser grundlegenden Haftungsuntersuchungen des Verbundes wurde die Prozessfähigkeit überprüft.

### II Beispiel 2 zur Herstellung von Thermoplast-Kautschuk Verbund-Formteilen

Aus den oben genannten Polyamiden 1-13 als thermoplastischer Komponente und jeweils der Mischung des og. Beispiels 6 als Kautschukkomponente wurden in einem Versuchswerkzeug im Mehrkomponenten-Spritzgießverfahren mittels der Drehtellertechnik Thermoplast-Kautschuk Verbund-Formteile hergestellt. Hierzu wurde zunächst der Vorspritzling aus der thermoplastischen Formmasse gefertigt. Das Einspritzen des Thermoplasten erfolgte bei spezifischen Spritzdrücken bei 1000 bar und einer Massetemperatur von ca. 290 °C. Anschließend öffnete das Werkzeug, die bewegliche Werkzeughälfte, in der der Vorspritzling verblieb, wurde um 180° gedreht und wieder geschlossen. Der Vorspritzling befand sich nun in der geometrisch veränderten Kautschukkavität, und wurde im Spritzgussverfahren der Kautschukkomponente mit der direkt angespritzten Kautschukkomponente komplettiert. Der spezifische Spritzdruck der Kautschukkomponente lag bei 1400 bar, und einer Massetemperatur von 95°C. Nach der Formfüllung wurde der Kautschuk zum Erreichen der Formstabilität bei einer Werkzeugtemperatur- von 175°C vernetzt und nach einer Heizzeit von 80 sec: entformt: Parallel zum Einspritzvorgang der Kautschukkomponente wurde bereits erneut der thermoplastische Vorspritzling gefertigt. Im nachgeschalteten Temperprozess wurde die Vulkanisation zur Einstellung des gewünschten Eigenschaftsprofils bei einer bevorzugten Temperatur von 175°C und einer Temperzeit von 30 Minuten vervollständigt. Abbildung 1 zeigt eine Skizze des Thermoplast-Kautschuk Verbund-Formteils, welches, einen Medienbehälter mit direkt angespritzter elastomerer Dichtung darstellt.

### Dichtigkeitsprüfungen an den Thermoplast-Kautschuk Verbund-Formteilen aus Beispiel II

Hierzu wurden zum einen Dichtigkeitsprüfungen bei Raumtemperatur und zum anderen unter Temperaturwechselbeanspruchung durchgeführt.

Die zur Untersuchung der Dichtigkeit herangezogene Bauteilprüfung bei Raumtemperatur (RT) ist eine Prüfmethode, bei der das Bauteil mit einem ansteigendem Innendruck beaufschlagt wird, bis es infolge von Undichtigkeit zu einem Druckabfall (bzw. keinem weiteren Anstieg) kommt. Hierzu wurden die Medienbehälterdeckel mit eingespritzter Dichtung auf einer Aluminiumplatte mit einem Drehmomentschlüssel verschraubt. Als Anziehdrehmoment wurden 8 Nm eingestellt. Bei diesem Anzugsmoment hat die Dichtung voraussichtlich die maximale Deformation erfahren. Um die Auflagefläche des Schraubenkopfes zu vergrößern, wurden Unterlegscheiben (M6x18) verwendet. Die Größe der Unterlegscheibe ist für die Dichtigkeit mitbestimmend. Die Aluminiumplatte ist mit einer Bohrung versehen, um mit Hilfe eines Mediums auf das zu prüfende Bauteil Druck auszuüben. Dafür wurde über einen Schnellverschluss ein Schlauch an die Aluminiumplatte angeschlossen, der das druckausübende Medium in das Bauteil führte.

Der Druck wird über einen Kompressor aufgebaut und ist über das Steuerelement der Prüfanlage einstellbar. Ein Drucksensor der Firma Kistler übermittelte an eine Anzeige den tatsächlich herrschenden Druck im System und gab den Druckverlauf an ein EDV System weiter. Er gibt Aufschluss darüber, wann das Bauteil undicht wird. Der höchste erreichte Druck wird von der Prüfanlage gespeichert und festgehalten. Unter Einsatz der erfindungsgemäßen Medienbehälterdeckel wurden Dichtigkeitsdrücke von ca. 22 bar erreicht.

Die zweite Dichtigkeitsuntersuchung erfolgte unter Temperaturwechselbeanspruchung bis 150°C. Bei diesem Test wurden die Medienbehälter auf einer Aluminiumplatte, ähnlich der Dichtigkeitsprüfung bei RT, verschraubt.

Die Versuchsformteile wurden von einem Medium durchströmt. Unter gewünschtem Druck wurde ein Testmedium (z.B. Wasser, Glykol oder Öl) durch die Probekörper geleitet. Der Druck war jeweils über Manometer am Ein- und Auslass abzulesen. Die Temperierung des Mediums erfolgt über ein Temperiergerät. Nachdem der gewünschte Druck und die Temperatur eingestellt war, wurde eine Versuchsdauer von 1000 Stunden durchgeführt. In diesem Fall wurde die Mediumtemperatur zwischen 25°C und 150°C bei einem Druck von 2,5 bar am Einlass und 2 bar am Auslass getestet. Als Testmedium wurde Motorenöl eingesetzt. Bei diesem Öl handelt es sich um ein vollsynthetisches Motorenöl mit der Bezeichnung SAE 0W-40, des Herstellers Mobil 1. Die Durchflussmenge betrug 8 1/min.

Der Abbau von Polymeren bzw. polymeren Netzwerken erfolgt durch Zufuhr von Energie. Dieser Langzeittest ist eine Form der künstlichen Alterung (im Laufe der Zeit ablaufende chemische und physikalische Vorgänge im Material) und soll die beim praktischen Gebrauch von polymeren Werkstoffen ablaufenden Alterungsprozesse, durch Anwendung zeitraffender Bedingungen, simulieren.

Die erfindungsgemäßen Thermoplast-Kautschuk Verbund-Formteile zeigten Dichtigkeit über die gesamte Versuchszeit hinweg.

## Patentansprüche

1. Mehrkomponenten-System zur Herstellung von Thermoplast-Kautschuk-Verbundformteilen enthaltend
1) eine Thermoplast-Komponente und
2) eine Kautschuk-Komponente enthaltend
a) ein oder mehrere Elastomere,
wobei diejenigen Elastomere, die mit 30 Gew.% oder mehr in der Kautschuk-Komponente enthalten sind, bezogen auf 100 Gew.% als Summe aller Elastomeren der Kautschuk-Komponente, peroxidisch vulkanisierbar sein müssen, und
b) zwei oder mehrere peroxidische Vernetzer, wobei mindestens ein peroxidischer Vernetzer mit einer Zerfallstemperatur T_{1/2} (1h) im Bereich von 70 bis 130°C und mindestens ein zweiter peroxidischer Vernetzer mit einer Zerfallstemperatur T_{1/2} (1h) im Bereich von 120 bis 160 °C verwendet wird, wobei mindestens zwei peroxidische Vernetzer enthalten sind, die einen Unterschied in der Zerfallstemperatur T_{1/2} (1h) von mindestens 5°C aufweisen,
wobei
die in der Thermoplast-Komponente 1) enthaltenen ein oder mehrere Thermoplaste, ausgewählt sind aus der Gruppe bestehend aus ein oder mehreren Polyamiden, Polyimiden, Polyethern, Polyestern, Polyphenylensulfid (PPS), Polycarbonaten oder Kombinationen aus den vorgenannten..

2. Mehrkomponenten-System gemäß Anspruch 1, wobei die Thermoplast-Komponente 1) ein oder mehrere Polyamide mit einer Erweichungstemperatur größer gleich 200 °C, insbesondere größer gleich 210°C enthält.

3. Mehrkomponenten-System gemäß Anspruch 1 oder 2, wobei die Kautschuk-Komponente 2) ein oder mehrere Elastomere ausgewählt aus der Gruppe umfassend Nitrilkautschuke, hydrierte Nitrilkautschuke, EVM, EPDM, AEM, ACM, Fluorkautschuke, Chloroprenkautschuke und chloriertes Polyethylen enthält.

4. Mehrkomponenten-System gemäß einem oder mehreren der Ansprüche 1 bis 3, wobei die Kautschuk-Komponente 2) des erfindungsgemäßen Mehrkomponenten-Systems neben ein oder mehreren Elastomeren zwei oder mehr peroxidische Vernetzer, wobei mindestens ein peroxidischer Vernetzer mit einer Zerfallstemperatur T_{1/2} (1h) im Bereich von 100 bis 125°C und mindestens ein zweiter peroxidischer Vernetzer mit einer Zerfallstemperatur T_{1/2} (1h) im Bereich von 130 bis 150°C, verwendet wird, wobei mindestens zwei Peroxide enthalten sind, die einen Unterschied in der Zerfallstemperatur T_{1/2} (1h) von mindestens 5°C aufweisen..

5. Mehrkomponenten-System gemäß einem oder mehreren der Ansprüche 1 bis 4, wobei der peroxidische Vernetzer mit einer Zerfallstemperatur T_{1/2} (1h) im Bereich von 70 bis 130°C ausgewählt ist aus der Gruppe bestehend aus Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2-Bis-(t-butylperoxy) buten und 4,4-di-tert.Butyl-peroxynonylvalerat.

6. Mehrkomponenten-System gemäß einem oder mehreren der Ansprüche 1 bis 5, wobei der peroxidische Vernetzer mit einer Zerfallstemperatur T_{1/2} (1h) im Bereich von 120 bis 160°C ausgewählt ist aus der Gruppe bestehend aus tert-Butylperbenzoat, 2,2 Bis(t-butylperoxy)-buten, 4,4-di-tert.Butylperoxynonylvalerat, Dicumylperoxid, 2,5-Dimethyl-2,5-di(t-butylperoxy)-hexan, tert-Butylcumylperoxid, 1,3-Bis(t-Butylperoxy isopropyl)-benzol, Di-t-butylperoxid und 2,5-Dimethyl-2,5-di(t-butylperoxy)-hexyn-3.

7. Mehrkomponenten-System gemäß einem oder mehreren der Ansprüche 1 bis 6, wobei als peroxidische Vernetzer die Kombination aus 1,3-Bis-(t-Butylperoxy isopropyl)-benzol und 1,1-Bis-(t-butylperoxy)-3,3,5-trimethylcylohexan, aus tert.-Butylperbenzoat und Di-t-butylperoxid, aus 1,3-Bis-(t-butylperoxy isopropyl)-benzol und Di-t-butylperoxid oder aus tert.-Butylperbenzoat und tert.-Butylcumylperoxid eingesetzt wird.

8. Mehrkomponenten-System gemäß einem oder mehreren der Ansprüche 1 bis 7 enthaltend
1) eine Thermoplast-Komponente enthaltend ein oder mehrere Polyamide und/oder ein oder mehrere Polyimide, und/oder ein oder mehrere Polyether und/oder ein oder mehrere Polyester und/oder ein oder mehrere PPS und/oder ein oder mehrere Polycarbonate, wobei diese Thermoplasten eine Erweichungstemperatur von gleich oder größer 180°C besitzen sowie
2) eine Kautschuk-Komponente enthaltend
a) einen oder mehrere peroxidisch vernetzbare hydrierte Nitrilkautschuke und/oder ein oder mehrere peroxidisch vernetzbare Vinylacetat-Ethylen-Copolymere und/oder ein oder mehrere peroxidisch vernetzbare Acrylat-Ethylen Copolymere und/oder ein oder mehrere peroxidisch vernetzbare Acrylat(co)polymere und/oder ein oder mehrere peroxidisch vernetzbare Nitrilkautschuke und/oder ein oder mehrere peroxidisch vernetzbare Chloroprenkautschuke und/oder ein oder mehrere peroxidisch vernetzbare Fluorkautschuke und/oder peroxidisch vernetzbares chloriertes Polyethylen und gegebenenfalls weitere, andere Elastomere, wobei alle vorgenannten Elastomere im Falle eines Einsatzes in einer Menge von 30 Gew.% oder mehr, bezogen auf 100 Gew% aller Elastomere in der Komponente 2), peroxidisch vernetzbar sein müssen und
b) zwei oder mehrere peroxidische Vernetzer, wobei mindestens ein peroxidischer Vernetzer mit einer Zerfallstemperatur T_{1/2} (1h) im Bereich von 70 bis 130°C und mindestens ein peroxidischer Vernetzer mit einer Zerfallstemperatur T_{1/2} (1h) im Bereich von 120 bis 160°C verwendet wird, wobei mindestens zwei Vernetzer enthalten sind, die einen Unterschied in der Zerfallstemperatur T_{1/2} (1h) von mindestens 5°C aufweisen.

9. Mehrkomponenten-System gemäß einem oder mehreren der Ansprüche 1 bis 8 enthaltend
1) eine Thermoplast-Komponente enthaltend ein oder mehrere Polyamide als Thermoplasten, die einer Erweichungstemperatur von gleich oder größer 180°C besitzen und
2) eine Kautschuk-Komponente enthaltend
a) einen oder mehrere peroxidisch vernetzbare hydrierte Nitrilkautschuke und
b) zwei oder mehrere peroxidische Vernetzer, wobei mindestens ein peroxidischer Vernetzer mit einer Zerfallstemperatur T_{1/2} (1h) im Bereich von 70 bis 130°C und mindestens ein peroxidischer Vernetzer mit einer Zerfallstemperatur T_{1/2} (1h) im Bereich von 120 bis 160°C verwendet wird, wobei mindestens zwei Vernetzer enthalten sind, die einen Unterschied in der Zerfallstemperatur T_{1/2} (1h) von mindestens 5°C aufweisen.

10. Verwendung des Mehrkomponenten-Systems gemäß einem oder mehreren der Ansprüche 1-9 zur Herstellung eines Thermoplast-Kautschuk Verbund-Formteils.

11. Verwendung des Mehrkomponenten-Systems gemäß Anspruch 10 zur Herstellung von abdichtenden Funktionselementen, Bauteilen oder Bauteilgruppen des Kühl- oder Ölkreislaufs von Automobilen.

12. Verwendung des Mehrkomponenten-Systems gemäß Anspruch 10 oder 11 zur Herstellung von Zylinderdeckeln mit umlaufender Dichtung, Ölwannen mit umlaufender Dichtung, Zahnriemenabdeckungen mit umlaufender Dichtung, Kettenabdeckungen mit umlaufender Dichtung, Motorgehäusen mit Dichtungen, Thermostatgehäusen mit umlaufender Dichtung, Wasserkästen mit Dichtungen, Kühlern mit Dichtungen, Öl-Modulen mit Dichtungen, Luftansaugstutzen mit Abdichtungen, Gehäusedeckeln mit Dichtungen, Ventildeckeln mit Dichtungen, gummibeschichteten Walzen, Flanschen, Rohr- und Schlauchkupplungen, Dichtungsrahmen, Dichtungen, Laufrollen oder von Strukturbauteilen mit Dämpfelementen.

13. Verfahren zur Herstellung eines Thermoplast-Kautschuk Verbund-Formteils unter Einsatz eines Mehrkomponenten-System gemäß einem oder mehreren der Ansprüche 1-9, wobei zunächst durch Einspritzen einer Thermoplast-Komponente 1) in eine Kavität eines Werkzeug ein Vorspritzling hergestellt wird und anschließend die Kautschuk-Komponente 2) in einer weiteren Kavität auf den Vorspritzling gespritzt wird.

14. Thermoplast-Kautschuk Verbund-Formteil erhältlich nach dem Verfahren gemäß Anspruch 13.

## Claims

1. Multicomponent system for production of thermoplastics-rubber composite mouldings comprising
1) a thermoplastic component and
2) a rubber component comprising
a) one or more elastomers,
where those elastomers of which 30% by weight or more are present in the rubber component, based on 100% by weight as the entirety of all of the elastomers of the rubber component, must be peroxidically vulcanizable, and
b) two or more peroxidic crosslinking agents, where at least one peroxidic crosslinking agent whose decomposition temperature T_{1/2} (1h) is in the range from 70 to 130°C and at least one second peroxidic crosslinking agent whose decomposition temperature T_{1/2} (1h) is in the range from 120 to 160°C is used, where at least two peroxidic crosslinking agents are present whose difference in decomposition temperature T_{1/2} (1h) is at least 5°C,
where
the one or more thermoplastics present in the thermoplastic component 1) have been selected from the group consisting of one or more polyamides, polyimides, polyethers, polyesters, polyphenylene sulphide (PPS), polycarbonates and combinations of the abovementioned.

2. Multicomponent system according to Claim 1, where the thermoplastic component 1) comprises one or more polyamides whose softening point is greater than or equal to 200°C, in particular greater than or equal to 210°C.

3. Multicomponent system according to Claim 1 or 2, where the rubber component 2) comprises one or more elastomers selected from the group consisting of nitrile rubbers, hydrogenated nitrile rubbers, EVM, EPDM, AEM, ACM, fluororubbers, chloroprene rubbers and chlorinated polyethylene.

4. Multicomponent system according to one or more of Claims 1 to 3, where the rubber component 2) of the inventive multicomponent system comprises not only one or more elastomers but also two or more peroxidic crosslinking agents, where at least one peroxidic crosslinking agent whose decomposition temperature T_{1/2} (1h) is in the range from 100 to 125°C and at least one second peroxidic crosslinking agent whose decomposition temperature T_{1/2} (1h) is in the range from 130 to 150°C is used, where at least two peroxides are present whose difference in decomposition temperature T_{1/2} (1h) is at least 5°C.

5. Multicomponent system according to one or more of Claims 1 to 4, where the peroxidic crosslinking agent whose decomposition temperature T_{1/2} (1h) is in the range from 70 to 130°C has been selected from the group consisting of bis(2,4-dichlorobenzoyl) peroxide, dibenzoyl peroxide, bis(4-chlorobenzoyl) peroxide, 1,1 1-bis(tert-butylperoxy)-3,3,5-trimethylcyclohexane, tert-butyl perbenzoate, 2,2-bis(t-butylperoxy)butene and 4,4-di-tert-butylperoxy-substituted nonyl valerate.

6. Multicomponent system according to one or more of Claims 1 to 5, where the peroxidic crosslinking agent whose decomposition temperature T_{1/2} (1h) is in the range from 120 to 160°C has been selected from the group consisting of tert-butyl perbenzoate, 2,2-bis(tert-butylperoxy)butene, 4,4-di-tert-butylperoxy-substituted nonyl valerate., dicumyl peroxide, 2,5-dimethyl-2,5-di(tert-butylperoxy)hexane, tert-butyl cumyl peroxide, 1,3-bis(tert-butylperoxyisopropyl)benzene, di-tert-butyl peroxide and 2,5-dimethyl-2,5-di(tert-butylperoxy)hex-3-yne.

7. Multicomponent system according to one or more of Claims 1 to 6, where the peroxidic crosslinking agent used comprises the combination of 1,3-bis(tert-butylperoxyisopropyl)benzene and 1,1-bis(tert-butylperoxy)-3,3,5-trimethylcyclohexane, of tert-butyl perbenzoate and di-tert-butyl peroxide, of 1,3-bis(tert-butylperoxyisopropyl)benzene and di-tert-butyl peroxide or of tert-butyl perbenzoate and tert-butyl cumyl peroxide.

8. Multicomponent system according to one or more of Claims 1 to 7 comprising
1) a thermoplastic component comprising one or more polyamides and/or one or more polyimides, and/or one or more polyethers and/or one or more polyesters and/or one or more PPS and/or one or more polycarbonates, where these thermoplastics have a softening point greater than or equal to 180°C, and also
2) a rubber component comprising
a) one or more peroxidically crosslinkable hydrogenated nitrile rubbers and/or one or more peroxidically crosslinkable vinyl acetate-ethylene copolymers and/or one or more peroxidically crosslinkable acrylate-ethylene copolymers and/or one or more peroxidically crosslinkable acrylate (co)polymers and/or one or more peroxidically crosslinkable nitrile rubbers and/or one or more peroxidically crosslinkable chloroprene rubbers and/or one or more peroxidically crosslinkable fluororubbers and/or peroxidically crosslinkable chlorinated polyethylene and, if appropriate, further, other elastomers, where any of the abovementioned elastomers of which the amount used is 30% by weight or more, based on 100% by weight of all of the elastomers in component 2), must be peroxidically crosslinkable and
b) two or more peroxidic crosslinking agents, where at least one peroxidic crosslinking agent whose decomposition temperature T_{1/2} (1h) is in the range from 70 to 130°C and at least one peroxidic crosslinking agent whose decomposition temperature T_{1/2} (1h) is in the range from 120 to 160°C is used, where at least two crosslinking agents are present whose difference in decomposition temperature T_{1/2} (1h) is at least 5°C.

9. Multicomponent system according to one or more of Claims 1 to 8 comprising
1) a thermoplastic component comprising one or more polyamides as thermoplastics which have a softening point greater than or equal to 180°C and
2) a rubber component comprising
a) one or more peroxidically crosslinkable hydrogenated nitrile rubbers and
b) two or more peroxidic crosslinking agents, where at least one peroxidic crosslinking agent whose decomposition temperature T_{1/2} (1h) is in the range from 70 to 130°C and at least one peroxidic crosslinking agent whose decomposition temperature T_{1/2} (1h) is in the range from 120 to 160°C is used, where at least two crosslinking agents are present whose difference in decomposition temperature T_{1/2} (1h) is at least 5°C.

10. Use of the multicomponent system according to one or more of Claims 1 to 9 for production of a thermoplastic-rubber composite moulding.

11. Use of the multicomponent system according to Claim 10 for production of sealing functional elements, or of components or of component groups in the cooling-circulation or oil-circulation system of automobiles.

12. Use of the multicomponent system according to Claim 10 or 11 for the production of cylinder covers with peripheral gasket, oil sumps with peripheral gasket, toothed-belt covers with peripheral gasket, chain covers with peripheral gasket, engine housings with gaskets, thermostat housings with peripheral gasket, water tanks with gaskets, radiators with gaskets, oil modules with gaskets, air intake nozzles with seals, housing covers with gaskets, valve covers with gaskets, rubber-coated rolls, flanges, pipe couplings and hose couplings, weatherstrips, gaskets, rollers, or of structural components with damping elements.

13. Process for producing a thermoplastics-rubber composite moulding with use of a multicomponent system according to one or more of Claims 1 to 9, where a preform is first produced via injection of a thermoplastic component 1) into a cavity of a mould and then the rubber component 2) is injected, in another cavity, onto the preform.

14. Thermoplastics-rubber composite moulding obtainable by the process according to Claim 13.

## Revendications

1. Système multicomposant pour la fabrication de pièces moulées composites thermoplastique-caoutchouc, contenant
1) un composant thermoplastique et
2) un composant caoutchouc contenant
a) un ou plusieurs élastomères,
les élastomères qui sont contenus à hauteur de 30 % en poids ou plus dans le composant caoutchouc, par rapport à 100 % en poids en tant que somme de tous les élastomères du composant caoutchouc, devant être vulcanisables peroxydiquement, et
b) deux agents de réticulation peroxydiques ou plus, au moins un agent de réticulation peroxydique qui a une température de décomposition T_{1/2} (1 h) dans la plage allant de 70 à 130 °C et au moins un second agent de réticulation peroxydique qui a une température de décomposition T_{1/2} (1 h) dans la plage allant de 120 à 160 °C étant utilisés, au moins deux agents de réticulation peroxydiques qui présentent une différence de la température de décomposition T_{1/2} (1 h) d'au moins 5 °C étant contenus,
le ou les thermoplastiques contenus dans le composant thermoplastique 1) étant choisis dans le groupe constitué par un ou plusieurs polyamides, polyimides, polyéthers, polyesters, sulfure de polyphénylène (PPS), polycarbonates ou leurs combinaisons.

2. Système multicomposant selon la revendication 1, dans lequel le composant thermoplastique 1) contient un ou plusieurs polyamides ayant une température de ramollissement supérieure ou égale à 200 °C, notamment supérieure ou égale à 210 °C.

3. Système multicomposant selon la revendication 1 ou 2, dans lequel le composant caoutchouc 2) contient un ou plusieurs élastomères choisis dans le groupe comprenant les caoutchoucs de nitrile, les caoutchoucs de nitrile hydrogénés, l'EVM, l'EPDM, l'AEM, l'ACM, les caoutchoucs fluorés, les caoutchoucs de chloroprène et le polyéthylène chloré.

4. Système multicomposant selon une ou plusieurs des revendications 1 à 3, dans lequel le composant caoutchouc 2) du système multicomposant selon l'invention contient, outre un ou plusieurs élastomères, deux agents de réticulation peroxydiques ou plus, au moins un agent de réticulation peroxydique qui a une température de décomposition T_{1/2} (1 h) dans la plage allant de 100 à 125 °C et au moins un second agent de réticulation peroxydique qui a une température de décomposition T_{1/2} (1 h) dans la plage allant de 130 à 150 °C étant utilisés, au moins deux peroxydes qui présentent une différence de la température de décomposition T_{1/2} (1 h) d'au moins 5 °C étant contenus.

5. Système multicomposant selon une ou plusieurs des revendications 1 à 4, dans lequel l'agent de réticulation peroxydique qui a une température de décomposition T_{1/2} (1 h) dans la plage allant de 70 à 130 °C est choisi dans le groupe constitué par le peroxyde de bis(2,4-dichlorobenzyle), le peroxyde de dibenzoyle, le peroxyde de bis(4-chlorobenzoyle), le 1,1-bis-(t-butylperoxy)-3,3,5-triméthylcyclohexane, le perbenzoate de tert-butyle, le 2,2-bis-(t-butylperoxy) butène et le valérate de 4,4-di-tert.-butyl-peroxynonyle.

6. Système multicomposant selon une ou plusieurs des revendications 1 à 5, dans lequel l'agent de réticulation peroxydique qui a une température de décomposition T_{1/2} (1 h) dans la plage allant de 120 à 160 °C est choisi dans le groupe constitué par le perbenzoate de tert-butyle, le 2,2-bis(t-butylperoxy)-butène, le valérate de 4,4-di-tert.-butyl-peroxynonyle, le peroxyde de dicumyle, le 2,5-diméthyl-2,5-di(t-butylperoxy)-hexane, le peroxyde de tert-butylcumyle, le 1,3-bis(t-butylperoxy-isopropyl)-benzène, le peroxyde de di-t-butyle et le 2,5-diméthyl-2,5-di(t-butyperoxy)-hexyne-3.

7. Système multicomposant selon une ou plusieurs des revendications 1 à 6, dans lequel la combinaison de 1,3-bis(t-butylperoxy-isopropyl)-benzène et de 1,1-bis-(t-butylperoxy)-3,3,5-triméthylcyclohexane, de perbenzoate de tert.-butyle et de peroxyde de di-t-butyle, de 1,3-bis(t-butylperoxy-isopropyl)-benzène et de peroxyde de di-t-butyle ou de perbenzoate de tert.-butyle et de peroxyde de tert.-butylcumyle est utilisée en tant qu'agent de réticulation peroxydique.

8. Système multicomposant selon une ou plusieurs des revendications 1 à 7, contenant
1) un composant thermoplastique contenant un ou plusieurs polyamides et/ou un ou plusieurs polyimides et/ou un ou plusieurs polyéthers et/ou un ou plusieurs polyesters et/ou un ou plusieurs PPS et/ou un ou plusieurs polycarbonates, ces thermoplastiques présentant une température de ramollissement supérieure ou égale à 180 °C, et
2) un composant caoutchouc contenant
a) un ou plusieurs caoutchoucs de nitrile hydrogénés réticulables peroxydiquement et/ou un ou plusieurs copolymères acétate de vinyle/éthylène réticulables peroxydiquement et/ou un ou plusieurs copolymères acrylate-éthylène réticulables peroxydiquement et/ou un ou plusieurs (co)polymères d'acrylate réticulables peroxydiquement et/ou un ou plusieurs caoutchoucs de nitrile réticulables peroxydiquement et/ou un ou plusieurs caoutchoucs de chloroprène réticulables peroxydiquement et/ou un ou plusieurs caoutchoucs fluorés réticulables peroxydiquement et/ou du polyéthylène chloré réticulable peroxydiquement et éventuellement d'autres élastomères supplémentaires, tous les élastomères susmentionnés devant être réticulables peroxydiquement dans le cas d'une utilisation en une quantité de 30 % en poids ou plus, par rapport à 100 % en poids de tous les élastomères dans le composant 2), et
b) deux agents de réticulation peroxydiques ou plus, au moins un agent de réticulation peroxydique qui a une température de décomposition T_{1/2} (1 h) dans la plage allant de 70 à 130 °C et au moins un agent de réticulation peroxydique qui a une température de décomposition T_{1/2} (1 h) dans la plage allant de 120 à 160 °C étant utilisés, au moins deux agents de réticulation qui présentent une différence de la température de décomposition T_{1/2} (1 h) d'au moins 5 °C étant contenus.

9. Système multicomposant selon une ou plusieurs des revendications 1 à 8, contenant
1) un composant thermoplastique contenant un ou plusieurs polyamides en tant que thermoplastiques, qui présentent une température de ramollissement supérieure ou égale à 180 °C, et
2) un composant caoutchouc contenant
a) un ou plusieurs caoutchoucs de nitrile hydrogénés réticulables peroxydiquement et
b) deux agents de réticulation peroxydiques ou plus, au moins un agent de réticulation peroxydique qui a une température de décomposition T_{1/2} (1 h) dans la plage allant de 70 à 130 °C et au moins un agent de réticulation peroxydique qui a une température de décomposition T_{1/2} (1 h) dans la plage allant de 120 à 160 °C étant utilisés, au moins deux agents de réticulation qui présentent une différence de la température de décomposition T_{1/2} (1 h) d'au moins 5 °C étant contenus.

10. Utilisation du système multicomposant selon une ou plusieurs des revendications 1 à 9 pour la fabrication d'une pièce moulée composite thermoplastique-caoutchouc.

11. Utilisation du système multicomposant selon la revendication 10 pour la fabrication d'éléments fonctionnels étanchéifiants, de composants ou de groupes de composants pour le circuit de refroidissement ou d'huile d'automobiles.

12. Utilisation du système multicomposant selon la revendication 10 ou 11 pour la fabrication de couvercles de cylindres à joint circonférentiel, de cuvettes à huile à joint circonférentiel, de couvercles de courroie dentée à joint circonférentiel, de couvercles de chaîne à joint circonférentiel, de boîtiers de moteur à joints, de boîtiers de thermostat à joint circonférentiel, de réservoirs d'eau à joints, de refroidisseurs à joints, de modules d'huile à joints, de raccords d'aspiration d'air à joints, de couvercles de boîtier à joints, de couvercles de vanne à joints, de cylindres revêtus de caoutchouc, de brides, de couplages de tubes et de tuyaux, de cadres d'étanchéité, de joints, de galets de roulement ou de composants structuraux à éléments amortisseurs.

13. Procédé de fabrication d'une pièce moulée composite thermoplastique-caoutchouc utilisant un système multicomposant selon une ou plusieurs des revendications 1 à 9, dans lequel une pièce pré-moulée est tout d'abord fabriquée par injection d'un composant thermoplastique 1) dans une cavité d'un outil, puis le composant caoutchouc 2) est injecté dans une autre cavité sur la pièce pré-moulée.

14. Pièce moulée composite thermoplastique-caoutchouc pouvant être obtenue par le procédé selon la revendication 13.
